# EUROPEAN PATENT APPLICATION

(11) **EP 0 535 583 A2**
(43) Date of publication of application: **07.04.1993**
(21) Application number: 92116611.2
(22) Date of filing: 29.09.1992
(51) Int. Cl.: G11B 7/09

(54) **Lens drive mechanism**

(30) Priority: 02.10.1991 JP 255150/91; 06.04.1992 JP 83570/92
(71) Applicant: MATSUSHITA ELECTRIC INDUSTRIAL CO., LTD., Kadoma-shi, Osaka-fu, 571 (JP)
(72) Inventor: Wakabayashi, Kanji, Kyoto-shi, Kyoto-fu 612 (JP); Miyazaki, Benichi, Katano-shi, Osaka-fu 576 (JP); Edahiro, Yasuaki, Hirakata-shi, Osaka-fu 573 (JP)
(74) Representative: Eisenführ, Speiser & Partner

(57) **Abstract**

A lens drive mechanism in an optical information recording and/or reading apparatus for recording or reading information on or from a plate-like recording medium, which mechanism comprises a movable unit including an objective lens assembly and a lens holder carrying the objective lens assembly, and a support unit for supporting the movable unit for movement in a direction close towards and away from the recording medium. A retract lever is mounted on a stationary unit for pivotal movement about an axis between a first position, in which the retract lever is disengaged from the movable unit, and a second position in which the retract lever is engaged with the movable unit to shift the movable unit away from the recording medium. Instead of the retract lever, a gear mechanism or an electromagnet system is used to move the movable unit in the direction close towards and away from the recording medium.

## Description

### BACKGROUND OF THE INVENTION

### (Field of the Invention)

The present invention generally relates to a lens drive mechanism and, more particularly, to the lens drive mechanism in an optical information read and/or write device for optically reading or writing information from or in a disc-shaped recording medium.

### (Description of the Prior Art)

The prior art lens drive mechanism used in the optical information read/write device comprises an objective lens assembly through which optical information is recorded or read on or from a disc-shaped recording medium generally known as a disc; a lens holder carrying the objective lens assembly and provided with a slidable bearing having a center axis extending parallel to the optical axis K of the objective lens assembly; a focusing coil mounted on the lens holder and having a winding axis extending parallel to the optical axis K; a tracking coil mounted on the lens holder and having a winding axis extending perpendicular to the optical axis K; an actuator base; a shaft fixed at one end to the actuator base and rotatably and slidably extending through the slidable bearing on the lens holder; a focusing magnet rigidly mounted on the actuator base at a position confronting the focusing coil for generating a magnetic flux in a direction perpendicular to the winding axis of the focusing coil; a tracking magnet rigidly mounted on the actuator base at a position confronting the tracking coil for generating a magnetic flux in a direction parallel to the winding axis of the tracking coil; and an actuator cover enclosing the lens drive mechanism and having an opening defined therein at a location confronting the objective lens assembly.

The objective lens assembly, the lens holder and the focusing and tracking coils altogether forms a movable unit whereas the actuator base and the focusing and tracking magnets are fixedly secured to a fixed portion.

The slidable bearing on the lens holder and the shaft rotatably and slidably extending through the slidable bearing form a support means. The focusing coil and the focusing magnet altogether constitute a focusing drive means for driving in a focusing direction F which is parallel to the optical axis K whereas the tracking coil and the tracking magnet altogether constitute a tracking drive means for driving in a tracking direction T parallel to a radial direction of the optical disc. It is to be noted that the focusing direction F is generally chosen to conform to the direction in which a gravitational force acts.

The prior art lens drive mechanism of the above described construction operates in the following manner.

When a focusing control of the objective lens assembly with respect to a recording surface of the optical disc is taking place, the objective lens assembly is driven in the focusing direction F. This drive of the objective lens assembly in the focusing direction F is carried out in the following method. Specifically, when an electric power is supplied across the focusing coil secured to the lens holder carrying the objective lens assembly, by the electromagnetism created by the electric current flowing across the focusing coil and the magnetic flux produced by the focusing magnet fixed to the actuator base, the focusing coil receives an electromagnetic force acting in a direction parallel to the focusing direction F of the objective lens assembly so that the lens holder supported by the shaft fixed at one end to the actuator base is slidingly moved in a direction parallel to the focusing direction F thereby to drive the objective lens assembly in the focusing direction F.

In the event that the supply of the electric power is abruptly interrupted by some reason during the information reading or writing or when the information reading or writing terminates and, hence, the electric power is no longer supplied to the focusing coil, the lens holder carrying the objective lens assembly descends downwardly by gravity.

The above described prior art lens drive mechanism has some problems which will now be discussed. As is well known to those skilled in the art, in the optical information read/write device, particularly that of a type utilizing an optical disc, the necessity of accomplishing a double-sided recording or reading is increasing in order to increase the information holding capacity and the data transfer speed. In such case, the lens drive mechanism is required to be installed not only for one of the opposite surfaces of the optical disc, but also for the other of the opposite surfaces of the same optical disc.

With the prior art lens drive mechanism of the type discussed hereinabove in which the focusing direction F is chosen to be parallel to the direction in which the gravitational force acts, , however, the abrupt failure of the electric supply by some reason during the information reading or writing or when the information reading or writing terminates results in a failure to supply the electric power to the focusing coil. Once this occurs, the lens holder carrying the objective lens assembly descends downwardly by gravity, resulting in an undesirable collision of the objective lens assembly against the optical disc.

Also, while in the above described prior art lens drive mechanism the focusing direction F is chosen to be parallel to the direction in which the gravitational force acts, a similar problem will occur even in the different lens drive mechanism in which the focusing direction F is chosen to be parallel to a direction other than the direction in which the gravitational force acts. More specifically, if the focusing direction F is chosen to be parallel to a direction other than the direction in which the gravitational force acts, the failure of the electric power supply by a similar reason during the information reading or recording will result in a collision of the objective lens assembly against the optical disc, provided that at the time of the power failure the lens holder has a speed component acting in a direction close towards the optical disc.

A support mechanism employed in the above described prior art lens drive mechanism for supporting the lens holder is generally referred to as an axially slidable type. Where a support mechanism for supporting the lens holder with the use of an elastic member in place of the axially slidable and rotatable support mechanism, or a support mechanism employing a hinge for the support of the lens holder, is employed, the support mechanism has a flexible function of returning to a neutral point. However, if the support mechanism is so designed to have an increased capability of returning to the neutral point, a region in which a linearity of displacement of the movable unit relative to the input current tends to be reduced. Accordingly, it is indeed difficult to render the support mechanism to have a returning force necessary to return the movable unit to a position spaced from the disc a distance required to avoid any possible collision. Hence, even the lens drive mechanism utilizing the support mechanism employing the elastic member or the hinge has a similar problem in that the objective lens assembly may collide against the optical disc.

Japanese Laid-open Patent Publication No. H3-52123, for example, discloses a lens drive mechanism comprising an axially slidable support mechanism wherein the focusing direction F is chosen to be parallel to the direction in which the gravitational force acts and having a capability of driving the lens holder in two directions parallel to the focusing and tracking directions F and T, respectively. In this known lens drive mechanism, there is provided a means for applying to the focusing coil a direct current flowing in a direction required to depart the lens holder away from the optical disc, during a period subsequent to the start of a loading operation, for loading the optical disc on a spindle motor forming a part of an optical read/write device including the lens drive mechanism, and prior to the termination of the loading operation. The provision of the direct current applying means referred to above is effective to forcibly move the objective lens assembly in a direction away from the optical disc when the optical disc descends in a direction close towards the objective lens assembly as a result of the loading operation, thereby to avoid any possible collision between the optical disc and the objective lens assembly.

However, the lens drive mechanism disclosed in JP publication No. H3-52123 has a problem in that, in the event of the electric power failure occurring during the information recording or reading by some reason, the objective lens assembly cannot be retracted to a position necessary to avoid the possible collision against the optical disc, and hence, has a possibility that the objective lens assembly may collide against the optical disc. If the lens drive mechanism is disposed above an upper surface of the optical disc in order to accomplish a double-sided recording or reading, the possibility of the optical disc colliding against the objective lens assembly may be enhanced.

Also, regardless of whether the lens drive mechanism is installed for each of the opposite surfaces of the optical disc or no matter how the lens drive mechanism is installed relative to the optical disc, the objective lens assembly is at all times exposed to the atmosphere exteriorly of the actuator covering and is hence susceptible to foreign matter afloat in the air. A deposition of foreign matter on the objective lens assembly may result in that normal information recording or reading will no longer be possible.

### SUMMARY OF THE INVENTION

The present invention has been devised with a view to substantially eliminating the above discussed problems and is intended to provide an improved lens drive mechanism in an optical information recording and/or reading apparatus, which is effective to avoid any possible collision between an optical recording medium and an objective lens assembly which would occur at the time of termination of an information recording or reading or in the event of a failure of the electric power supply.

In order to accomplish the foregoing object, the present invention provides a lens drive mechanism in an optical information recording and/or reading apparatus for recording or reading information on or from a plate-like recording medium, which mechanism comprises a movable unit including an objective lens assembly and a lens holder carrying the objective lens assembly; a support means for supporting the movable unit for movement in a direction close towards and away from the recording medium; a stationary unit for supporting the support means; a drive means for driving the movable unit in said direction relative to the stationary unit; a drive means for driving the movable unit relative to the stationary unit in a direction perpendicular to a surface of the recording medium; a covering enclosing the movable unit, the support means or the drive means and having an opening defined therein at a location alignable with the objective lens assembly; a first source of electric power for supplying an electric current necessary to allow the information recording and/or reading apparatus, including the lens drive mechanism, to perform a normal operation; a second source of electric power other than the first electric power source; a separating means for separating the movable unit away from the recording medium; a position retaining means for retaining a position of the objective lens assembly which has been separated away from the recording medium; and a control means for monitoring a voltage of the first electric power source and for supplying an electric current to said pivot means when an abnormality is detected in the voltage of the first electric power source.

According to the present invention, at the time of completion of the information recording or reading, the control means is operable to cause the first power source to supply an electric current to the separating means or the position retaining means, but in the event that the power supply is abruptly interrupted during the information recording or reading by some reason, the control means monitors the voltage of the first power source and to cause the second power source to supply the electric power to the separating means or the position retaining means in the event of an abnormality in the voltage so monitored, whereby the objective lens assembly is separated away from the recording medium and retained by the position retaining means at a position spaced a distance from the recording medium. Accordingly, in the lens drive mechanism disposed above the recording medium, even though no electric power is supplied to the focusing coil by reason of a failure of the electric power source to supply the electric power abruptly at the time of completion of the information recording or reading or during the information recording or reading, there is no possibility that the objective lens assembly may collide against the recording medium, thereby providing an increased reliability of the apparatus.

Preferably, the position retaining means is comprised of a shutter for selectively closing and opening the opening in the covering and a shutter drive means for driving the shutter between open and closed positions. In such case, a cleaning member may be mounted on the shutter so that, during the angular movement of the shutter between the closed and open positions, the objective lens assembly can be cleaned.

According to another aspect of the present invention, the use of the shutter is effective to close the opening in the covering when and so long as the objective lens assembly is separated away from the recording medium. This means that no foreign matter outside the covering will enter the interior of the covering thereby providing a dust-proof effect. The use of the cleaning member on the shutter is effective to clean the objective lens assembly as the shutter is moved from the closed position towards the open position or from the open position towards the closed position.

### BRIEF DESCRIPTION OF THE DRAWINGS

This and other objects and features of the present invention will become clear from the following description taken in conjunction with preferred embodiments thereof with reference to the accompanying drawings, in which like parts are designated by like reference numerals and in which:
Fig. 1 is a schematic exploded view of a lens drive mechanism according to a first preferred embodiment of the present invention;
Fig. 2 is a fragmentary front elevational view, on an enlarged scale, of the lens drive mechanism shown in Fig. 1;
Fig. 3 is a view similar to Fig. 2, showing the lens drive mechanism held in a different operative position;
Figs. 4 to 7 are fragmentary front elevational views of a portion of the lens drive mechanism showing a retract lever held in different operative positions, respectively;
Fig. 8 is a flowchart showing the sequence of operation of the lens drive mechanism according to the first preferred embodiment of the present invention;
Fig. 9 is a circuit block diagram showing an electric circuit required to operate the retract lever used in the lens drive mechanism of Fig. 1;
Fig. 10 is a diagram used to explain the operation of a timing circuit shown in Fig. 9;
Fig. 11 is a timing chart showing waveforms of various signals appearing in the circuit shown in Fig. 9;
Fig. 12 is a schematic exploded view of the lens drive mechanism according to a second preferred embodiment of the present invention;
Fig. 13 is a fragmentary front elevational view, on an enlarged scale, of the lens drive mechanism shown in Fig. 12;
Fig. 14 is a flowchart showing the sequence of operation of the lens drive mechanism according to the second preferred embodiment of the present invention;
Fig. 15 is a circuit block diagram showing an electric circuit required to operate the retract lever used in the lens drive mechanism of Fig. 12;
Figs. 16 and 17 are diagrams used to explain the operation of timing circuits shown in Fig. 15;
Fig. 18 is a timing chart showing waveforms of various signals appearing in the circuit shown in Fig. 15;
Fig. 19 is a schematic exploded view of the lens drive mechanism according to a third preferred embodiment of the present invention;
Fig. 20 is a fragmentary front elevational view, on an enlarged scale, of the lens drive mechanism shown in Fig. 19;
Figs. 21 to 24 are fragmentary front views showing the sequence of operation of a shutter employed in the lens drive mechanism shown in Fig. 19;
Fig. 25 is a flowchart showing the sequence of operation of the lens drive mechanism according to the third preferred embodiment of the present invention;
Fig. 26 is a circuit block diagram showing an electric circuit required to operate the shutter used in the lens drive mechanism of Fig. 19;
Figs. 27 and 28 are diagrams used to explain the operation of timing circuits shown in Fig. 26;
Fig. 28 is a schematic exploded view of the lens drive mechanism according to a fourth preferred embodiment of the present invention;
Fig. 29 is a timing chart showing respective waveforms of various signals appearing in the circuit shown in Fig. 26;
Fig. 30 is a schematic exploded view of the lens drive mechanism according to a fourth preferred embodiment of the present invention;
Fig. 31 is a fragmentary front elevational view, on an enlarged scale, of the lens drive mechanism shown in Fig. 30;
Figs. 32 to 35 are fragmentary front views showing the sequence of operation of the shutter employed in the lens drive mechanism shown in Fig. 30;
Fig. 36 is a flowchart showing the sequence of operation of the lens drive mechanism according to the fourth preferred embodiment of the present invention;
Fig. 37 is a circuit block diagram showing an electric circuit required to operate the shutter used in the lens drive mechanism of Fig. 30;
Figs. 38 and 39 are diagrams used to explain the operation of timing circuits shown in Fig. 37;
Fig. 40 is a timing chart showing respective waveforms of various signals appearing in the circuit shown in Fig. 37;
Fig. 41 is a schematic exploded view of the lens drive mechanism according to a fifth preferred embodiment of the present invention;
Fig. 42 is a fragmentary front elevational view, on an enlarged scale, of the lens drive mechanism shown in Fig. 41;
Fig. 43 is a flowchart showing the sequence of operation of the lens drive mechanism according to the fifth preferred embodiment of the present invention;
Fig. 44 is a circuit block diagram showing an electric circuit required to operate the shutter used in the lens drive mechanism of Fig. 41;
Figs. 45 and 46 are diagrams used to explain the operation of timing circuits shown in Fig. 44; and
Fig. 47 is a timing chart showing respective waveforms of various signals appearing in the circuit shown in Fig. 44.

### DETAILED DESCRIPTION OF THE EMBODIMENTS

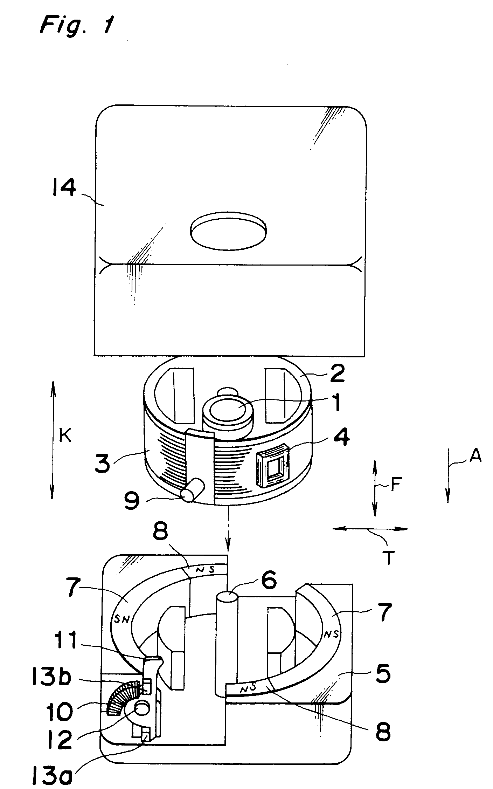

### First Embodiment (Figs. 1 to 11)

Referring first to Fig. 1, reference character F represents a focusing direction; reference character T represents a tracking direction; reference numeral 1 represents an objective lens assembly; reference numeral 2 represents a lens holder enclosing the objective lens assembly 1; reference numeral 3 represents a focusing coil wound on an outer peripheral surface of the lens holder 2 about a winding axis parallel to the direction K of the optical axis; reference numeral 4 represents a tracking coil mounted on the lens holder 2 and wound about an winding axis perpendicular to the direction K of the optical axis; reference numeral 5 represents an actuator base; reference numeral 6 represents a shaft connected rigidly at one end to the actuator base 5 and extending axially movably and rotatably through the lens holder 2; reference numeral 7 represents a focusing magnet secured to the actuator base 5 at a position confronting the focusing coil 3 for generating a magnetic flux in a direction perpendicular to the winding axis of the focusing coil 3; reference numeral 8 represents a tracking magnet secured to the actuator base 5 at a position confronting the tracking coil 4 for generating a magnetic flux in a direction parallel to the winding axis of the tracking coil 4; reference numeral 9 represents a stop pin secured to the lens holder 2 so as to protrude radially outwardly therefrom; reference numeral 10 represents an electromagnet assembly secured to the actuator base 5 and having an iron core; reference numeral 11 represents a retract lever pivotable about a pivot point lying perpendicular to the direction K of the optical axis; reference numeral 12 represents a pivot pin secured to the actuator base 5 so as to define the pivot point about which the retract lever 11 pivots; and reference numerals 13a and 13b represent respective permanent magnets secured to the retract lever 11 with their pole faces cooperable with respective ends of the electromagnet assembly 10.

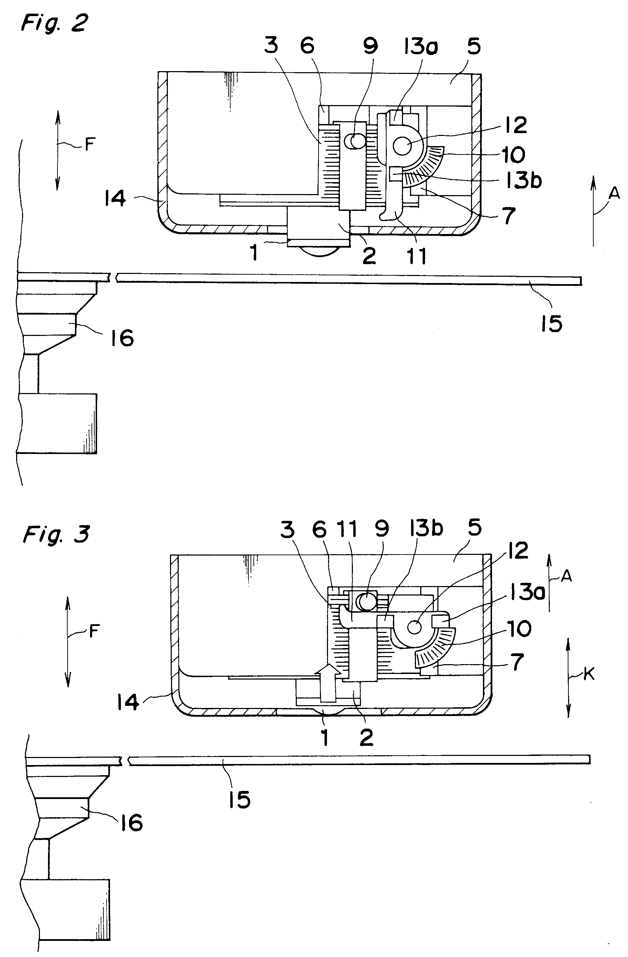

It is to be noted that the respective pole faces of the permanent magnets 13a and 13b which confronts the opposite ends of the electromagnet assembly 10 are of the same polarity. These permanent magnets 13a and 13b are so disposed relative to the electromagnet assembly 10 that the pole face of the permanent magnet 13b is held in contact with the adjacent end of the electromagnet assembly 10 when the retract lever 11 is angularly moved to a first position at which the retract lever 11 does not act on the lens holder 2 as shown in Fig. 2, but the pole face of the permanent magnet 13a is held in contact with the opposite end of the electromagnet assembly 10 when the retract lever 11 is angularly moved to a second position at which the retract lever 11 acts on the lens holder 2 to move the lens holder 2 in a direction, shown by the arrow A, away from an optical disc 15 as shown in Fig. 3.

A movable unit is constituted by the objective lens assembly 1, the lens holder 2 and their associated component parts while a stationary unit is constituted by the actuator base 5 and its associated component parts, and a support means is constituted by the lens holder 2 and the shaft 6 axially slidably and rotatably extending through the lens holder 2. A drive means for driving the objective lens assembly 1 in the focusing direction F is constituted by the focusing coil 3 and the focusing magnet 7, whereas a drive means for driving the objective lens assembly 1 in the tracking direction T is constituted by the tracking coil 4 and the tracking magnet 8.

A drive means for pivoting the retract lever 11 is constituted by the stop pin 9, the electromagnet assembly 10, the pivot pin 12 and the permanent magnets 13a and 13b.

Reference numeral 14 represents an actuator covering mounted on the actuator base 5 so as to enclose the lens drive mechanism as a whole and having an opening defined therein in alignment with the objective lens assembly 1. In Figs. 2 and 3, reference numeral 16 represents a spindle motor for the support of and driving the optical disc 15 in one direction thereabout.

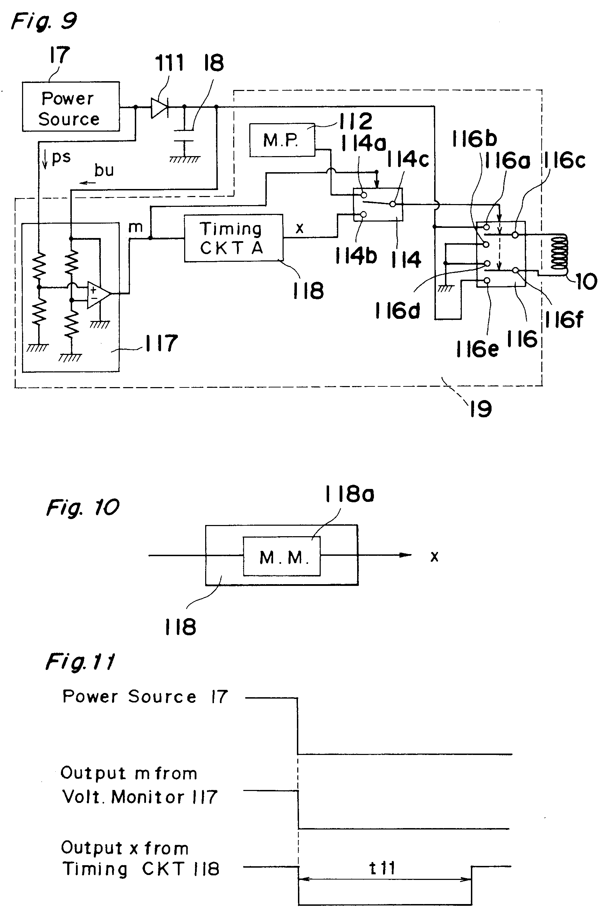

Referring now to Fig. 9, reference numeral 17 represents a source of electric power from which an electric current necessary to operate the optical read/write apparatus including the lens drive mechanism; reference numeral 18 represents a backup electric power source operable in a manner similar to the power source 18, but in the event of a failure of the power source 17 to operate; and reference numeral 19 represents a controller 19 operable to permit a supply of the electric current from the power source 17 to the electromagnet assembly 10 in response to receipt of an input signal indicative of a termination of the information reading or recording from or on the optical disc 15 and also to permit a supply of the electric current from the backup power source 18 to the electromagnet assembly 10 in response to receipt of an input signal indicative of a drop of the voltage of the power source 17 below a predetermined value, but to interrupt the supply of the electric power when the movement of the retract lever 11 terminates.

The lens drive mechanism of the above described construction according to the first preferred embodiment of the present invention operates in the following manner.

In the first place, the drive of the objective lens assembly 1 in the focusing direction F will be described with particular reference to Fig. 1. When an electric power is supplied across the focusing coil 3 fixed to the lens holder carrying the objective lens assembly 1, by the electromagnetism created by the electric current flowing across the focusing coil 3 and the magnetic flux produced by the focusing magnet 7 fixed to the actuator base 5, the focusing coil 3 receives an electromagnetic force acting in a direction parallel to the direction K of the optical axis of the objective lens assembly so that the lens holder 2 supported by the shaft 6 fixed at one end to the actuator base 5 is slidingly moved in a direction parallel to the direction of the optical axis K, thereby driving the objective lens assembly in the direction of the optical axis K thereof.

The drive of the objective lens assembly in the tracking direction T is accomplished when the electric power is supplied across the tracking coil 4 fixed to the lens holder 2 carrying the objective lens assembly 1. More specifically, when the electric power flows across the tracking coil 4, by the magnetism created by the electric current flowing across the tracking coil 4 and the magnetic flux produced by the tracking magnet 8 mounted on the actuator base 5, the tracking coil 4 receives an electromagnetic force acting around the shaft 6 and is therefore driven around the shaft 6 fixed at one end to the actuator base 5.

A retraction of the objective lens assembly 1 which would occur when the supply of the electric power from the power source 17 is abruptly interrupted by some reason during the information reading or recording or when the information reading or recording terminates will now be described with reference to Figs. 2 to 8.

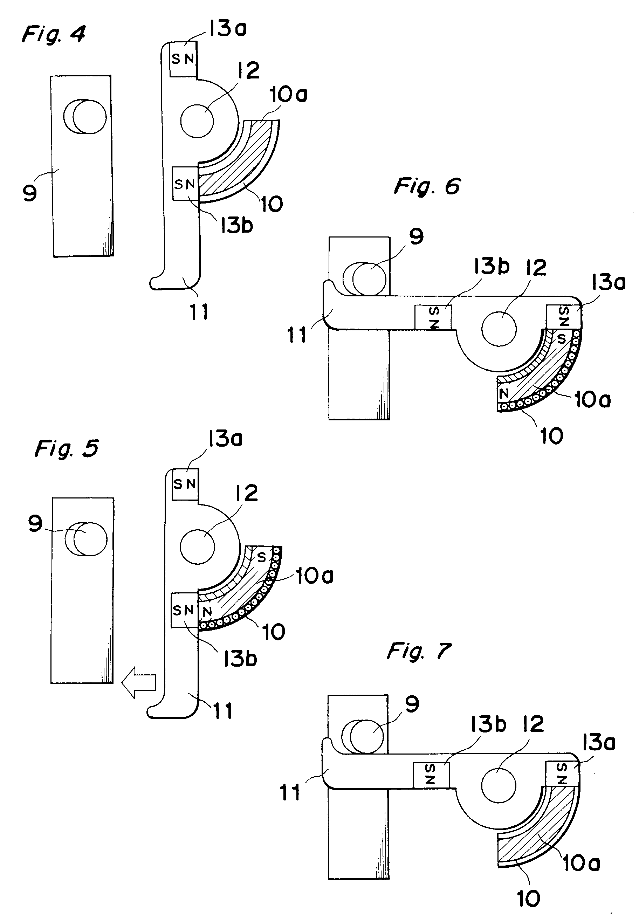

Assuming that the control in the focusing direction F is taking place, no electric current is supplied to the electromagnet assembly 10 and the retract lever 11 is held in a position shown in Fig. 4 at which the retract lever 11 does not act on the lens holder 2 and, hence, the movable unit, by the effect of a magnetism developed between the permanent magnet 13 and the iron core of the electromagnet assembly 10.

However, at the time of termination of the information recording or reading, the controller 19 shown in Fig. 9 receives a signal indicative of the termination of the information recording or reading and, in response thereto, causes the power source 17 to supply a direct current flowing in a direction shown in Fig. 5 to the electromagnet assembly 10 and, therefore, a force necessary to pivot the retract lever 11 in a direction shown by the arrow in Fig. 5 acts on the retract lever 11 by the action of a magnetic repulsive force developed between the permanent magnet 13b and the electromagnet assembly 10 and a magnetic attractive force developed between the permanent magnet 13a and the electromagnet assembly 10. Consequently, the retract lever 11 is pivoted to a position shown in Fig. 6 at which the retract lever 11 acts on the lens holder 2 to move the latter in the direction A away from the optical disc 15. At this time, the retract lever 11 is engaged to the stop pin 9 fast with the lens holder 12 to shift the lens holder 2 in the direction A away from the optical disc 15. This condition is also shown in Fig. 3. After the lens drive mechanism has assumed the condition shown in Fig. 3, the supply of the electric current from the power source 17 is interrupted and, hence, no electric current flow across the electromagnet assembly 10, but the retract lever 11 is, as shown in Fig. 7, retained at the position of Fig. 6 by the effect of the magnetic force developed between the permanent magnet 13a and the iron core of the electromagnet assembly 10.

On the other hand, should the power source 17 abruptly fail to supply the electric power during the information recording or reading by some reason, the voltage of the power source 17 being monitored by the controller 19 drops and the signal indicative of the voltage drop is then inputted. As a result thereof, the electromagnet assembly 10 is supplied with the direct current, flowing in such a direction as shown in Fig. 5, from the backup power source 18 and, therefore, the retract lever 11 and the electromagnet assembly 10 assume such positions as shown in Fig. 5. In this condition, the retract lever 11 receives the force acting in the direction shown by the arrow in Fig. 5 under the influence of the magnetic repulsive force developed between the permanent magnet 13b and the electromagnet assembly 10 and the magnetic attractive force developed between the permanent magnet 13a and the iron core of the electromagnet assembly 10. Accordingly, the retract lever 11 acts on the lens holder 2 while pivoting to move the lens holder 2 to the position where the lens holder 2 is spaced a distance from the optical disc 15 in the direction A. At this time, the retract lever 11 is held in engagement with the stop pin 9 to lift the lens holder 2 in the direction A away from the optical disc 15, allowing the lens drive mechanism to assume the position of Fig. 3. After the lens drive mechanism has assumed the position of Fig. 3, the supply of the electric power from the backup power source 18 is interrupted with the electric current no longer supplied to the electromagnet assembly 10, but the retract lever 11 is held at the position of Fig. 7 by the effect of the magnetic force developed between the permanent magnet 13a and the electromagnet assembly 10.

Referring particularly to Figs. 9 to 11, reference ;numeral 111 represents a diode; reference character ps represents an output signal from the power source 17; and reference character bu represents an output signal from the backup power source 18. The controller 19 shown therein includes a microprocessor (M.P.) 117 operable to cause the power source 17 to supply the electric power, required to pivot the retract lever 11 to move the lens holder 2 in the direction A away from the optical disc 15, to the electromagnet assembly 10 when the signal indicative of the termination of the information recording or reading on or from the optical disc 15 is inputted and also to output an electric signal necessary to interrupt the supply of the electric current after a predetermined time required for the lens holder 2 to move in the direction A away from the optical disc 15.

The controller 19 also includes a first switch 114 having terminals 114a, 114b and 114c; a second switch 116 having terminals 116a, 116b, 116c, 116d, 116e and 116f; and a voltage monitor 117 comprising at least four resistors and a comparator for monitoring the voltage of the power source 17 and operable to receive the output signals ps and bu respectively from the power source 17 and the backup power source 18 so that, when the voltage of the power source 17 is higher and lower than a predetermined level, high and low level signals m can be outputted therefrom, respectively. This controller 19 further includes a timing circuit A 118 operable in response to an output signal from the voltage monitor 117 to output an electric signal x. The microprocessor 112 has an output connected with the terminal 114a of the first switch 114 whereas the timing circuit A 118 has an output connected with the terminal 114b of the first switch 114. The terminals 116a and 116e of the second switch 116 are connected with the power source 17 or the backup power source 18, a switching between the power source 17 and the backup power source 18 being accomplished by the diode 111. The first switch 114 performs a switching operation in response to a command represented by the signal fed from the voltage monitor 117 whereas the second switch 116 performs a switching operation in response to a command represented by a signal fed from the first switch 114.

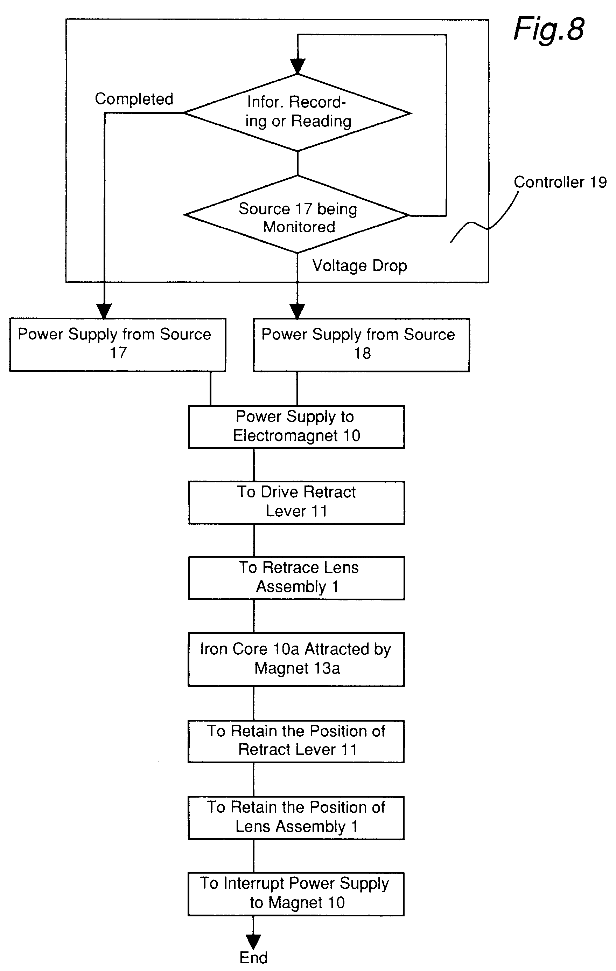

Referring to Fig. 10, reference numeral 118a represents a monostable multivibrator (M.M.), and the timing circuit A 118 shown in Fig. 8 is constituted by at least one monostable multivibrator 118a.

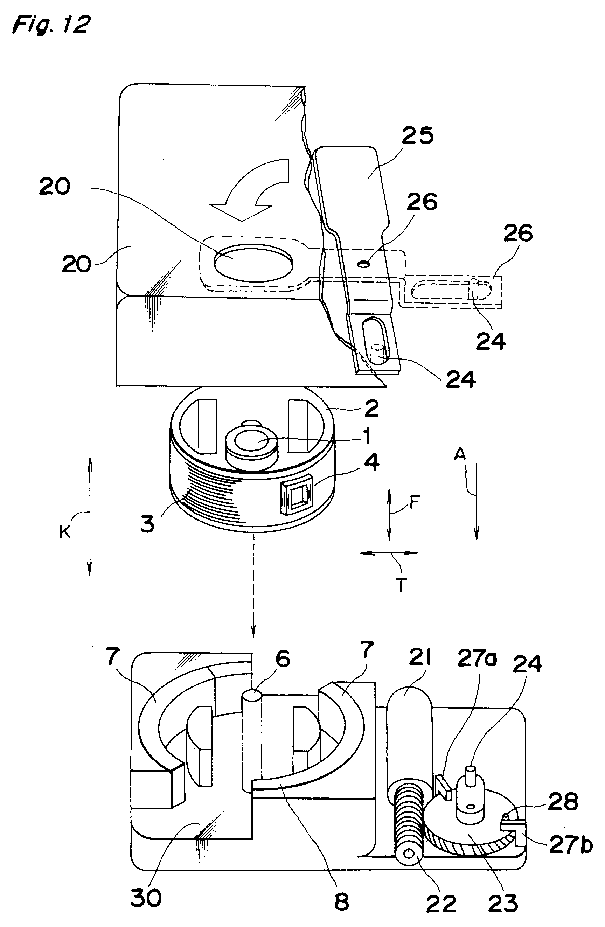

The circuit shown in Fig. 9 necessitated to operate the retract lever for the lens drive mechanism operates in the following manner. In the first place, the operation of the timing circuit A 118 shown in Fig. 10 will be discussed with reference to Fig. 11.

The output m generated from the voltage monitor 117 when the voltage of the power source 17 drops is of a waveform as shown in Fig. 11. At this time, the output x generated from the timing circuit A 118 in response to receipt of the output m from the voltage monitor 117 is of a waveform as shown in Fig. 11. In other words, the output x assumes a low level stage only during a predetermined length of time t11 after the output m from the voltage monitor 117 has been rendered in a low level state. This predetermined length of time t11 corresponds to the time span subsequent to the drive of the retract lever 11 and until the lens holder 2 is moved a sufficient distance in the direction A away from the optical disc 15.

Referring now to Fig. 9, since the voltage of the power source 17 is generally higher than the predetermined level during the operation at the time of termination of the information recording or reading, the output m remains in the high level state. Accordingly, in response to a command represented by the output m from the voltage monitor 117, a switch 154 is held in position with its terminals 154a and 154c connected together. When the signal indicative of the termination of the information recording or reading is inputted to the microprocessor 112 in the controller 19, the output from the microprocessor 113 is supplied to the switch 116 through the switch 114 as a command and, therefore, the terminals 116a and 116d are connected with the terminals 116c and 116f, respectively, only during the length of time t11. Thus, when the signal indicative of the termination of the information recording or reading is inputted to the microprocessor 112, the direct current is supplied from the power source 17 to the electromagnet assembly 10 through the switch 116 thereby causing the retract lever 11 to move the lens holder 2 in the direction A away from the optical disc 15 as shown in Fig. 6, the connection of the switch 116 being subsequently released after the passage of the predetermined time required for the retract lever 11 to assume the position of Fig. 6.

In the event of the failure of the power source 17 to supply the electric power by some reason during the information recording or reading, the voltage of the power source 17 is lowered down to a level lower than the predetermined level and, therefore, the output m is rendered in a low level state, causing the switch 114 to connect the terminals 114b and 114c together in response to the command represented by the output m. At the same time, the output x is supplied as a command to the switch 116 through the switch 114 and, consequently, the terminals 116a and 116d are connected with the terminals 116c and 116f, respectively, during the length of time t11 subsequent to failure of the power source 17 to supply the electric power and, after the length of time t11, the connection between the terminals 116a and 116c and that between the terminals 116d and 116f are released. Thus, the failure of the power source 17 to supply the electric power causes the backup power source 18 to effect the supply of the electric power to the electromagnet assembly 10 through the switch 116 and, after the lens holder 2 has been moved in the direction A away from the optical disc 15, the connection of the terminals of the switch 116 is released.

As hereinabove described, according to the first preferred embodiment of the present invention, the provision of the retract lever, the electromagnet assembly and the two permanent magnets is effective to cause the retract lever to engage the stop pin at the time of the failure of the power source thereby to separate the movable unit from the optical disc. Therefore, even though the objective lens assembly is disposed above the optical disc, any possible collision between the objective lens assembly and the optical disc can advantageously be avoided.

Also, the use of the electromagnet assembly and the two permanent magnets as a means for driving the retract lever substantially eliminates the necessity of the electric current being supplied to the electromagnet assembly during the retraction of the lens holder (i.e., when the retract lever is brought into engagement with the stop pin to shift the lens holder in a direction away from the optical disc) and also during the release of the lens holder (i.e., when the retract lever is disengaged from the stop pin to allow the objective lens assembly to be driven in the focusing direction) because the retract lever can be retained at a required position by the action of the magnetic attractive force developed between one of the permanent magnets and the iron core. Accordingly, the electric power consumption can advantageously be minimized.

In describing the first preferred embodiment of the present invention, the lens drive mechanism has been described as having a capability of driving the objective lens assembly in two directions, i.e., the focusing and tracking directions F and T. However, the present invention can equally apply to a lens drive mechanism designed to drive the objective lens assembly only in one direction, i.e., in the focusing direction F.

It is also to be noted that, while the support mechanism for the lens holder has been shown as an axially slidable and rotatable support type, the support mechanism employable in the present invention may be of a type utilizing an elastic member having a function of elastically returning to the neutral point or a hinge because, if the force of returning to the neutral point is chosen to be relatively great, the region in which a linearity of displacement of the movable unit relative to the input current tends to be reduced and it is difficult to impart to the support mechanism the returning force necessary to separate the objective lens assembly away from the optical disc.

Again, although the retention of the retract lever at one of the particular operative position has been described as accomplished by the contact between the corresponding permanent magnet and the iron core, arrangement may be made in which a non-magnetizable member is interposed between the corresponding permanent magnet and the iron core so that the magnetic attractive force acts therebetween through the non-magnetizable member. In such case, by varying the size of the non-magnetizable member, the size of the gap between the corresponding permanent magnet and the iron core can be adjusted to adjust the magnitude of the magnetic attractive force.

Yet, although in the foregoing embodiment it has been described that the retract lever starts its operation at the time of any one of the termination of the information recording or reading or in the event of the abrupt failure of the power source to supply the electric power, arrangement may be made such that the retract lever can start its operation when a focusing servo deviated, thereby to increase the reliability.

Moreover, although in the foregoing embodiment it has been described that the retract lever starts its operation at the time of any one of the termination of the information recording or reading or in the event of the abrupt failure of the power source to supply the electric power, arrangement may be made such that the retract lever can start its operation only at the time of termination of the information recording or reading or in the event of the failure of the power source to supply the electric power.

Yet, instead of the use of the microprocessor, a digital signal processor may be employed in the practice of the present invention.

### Second Embodiment (Figs. 12 to 18)

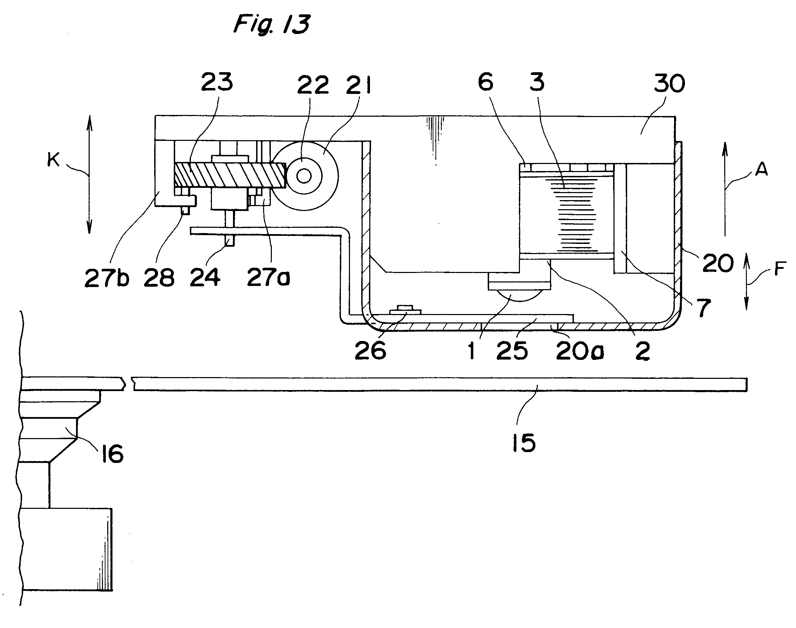

Referring now to Figs. 12 and 13, reference character F represents a focusing direction; reference character T represents a tracking direction; reference numeral 1 represents an objective lens assembly; reference numeral 2 represents a lens holder enclosing the objective lens assembly 1; reference numeral 3 represents a focusing coil wound on an outer peripheral surface of the lens holder 2 about a winding axis parallel to the direction K of the optical axis; reference numeral 4 represents a tracking coil mounted on the lens holder 2 and wound about an winding axis perpendicular to the direction K of the optical axis; reference numeral 30 represents an actuator base; reference numeral 6 represents a shaft connected rigidly at one end to the actuator base 30 and extending axially movably and rotatably through the lens holder 2; reference numeral 7 represents a focusing magnet secured to the actuator base 30 at a position confronting the focusing coil 3 for generating a magnetic flux in a direction perpendicular to the winding axis of the focusing coil 3; reference numeral 8 represents a tracking magnet secured to the actuator base 30 at a position confronting the tracking coil 4 for generating a magnetic flux in a direction parallel to the winding axis of the tracking coil 4; reference numeral 20 represents a covering mounted on the actuator base 30 so as to enclose the lens drive mechanism as a whole and having an opening 20a defined therein at a location confronting the objective lens assembly 1; reference numeral 21 represents a motor rigidly mounted on the actuator base 30; reference numeral 22 represents a worm gear mounted on a motor shaft of the motor 21; reference numeral 23 represents a worm wheel meshed with the worm gear 22 and rotatable about an axis parallel to the direction K of the optical axis; reference numeral 24 represents a drive pin fixed at a position spaced a predetermined distance from the axis of rotation of the work wheel 23; reference numeral 25 represents a shutter rotatable about an axis parallel to the direction K of the optical axis and having a groove defined therein for receiving the drive pin 24; reference numeral 26 represents a pivot shaft secured to the actuator base 30 and about which the shutter 25 rotates; reference numerals 27a and 27b represents respective stoppers mounted on the actuator base 30 for defining an angle through which the worm wheel 23 is rotatable; and reference numeral 28 represents a stopper pins secured to the worm wheel 23 and engageable selectively with one of the stoppers 27a and 27b upon rotation of the worm wheel 23 through the angle.

In Fig. 13, reference numeral 15 represents an optical disc; reference numeral 16 represents a spindle motor; and reference character A represents a direction parallel to the direction K of the optical axis and in which the lens holder 2 moves away from the optical disc 15.

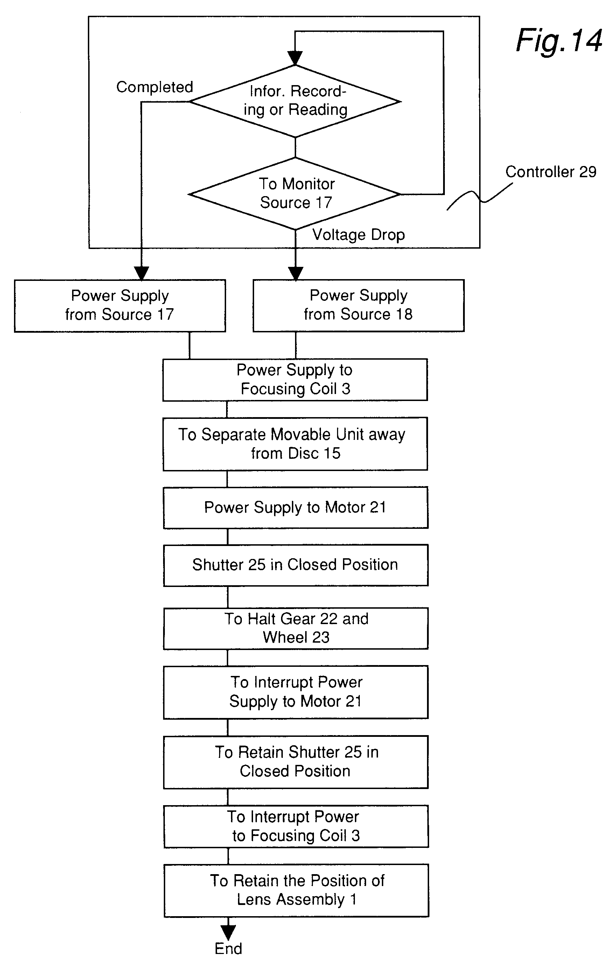

Referring to Fig. 14, reference numeral 17 represents a source of electric power from which an electric current necessary to operate the optical read/write apparatus including the lens drive mechanism; reference numeral 18 represents a backup electric power source constituted by a capacitor or a battery and operable in a manner similar to the power source 18, but in the event of a failure of the power source 17 to operate; and reference numeral 29 represents a controller operable to permit a supply of the electric current from the power source 17 to the focusing coil 3 and the motor 21 in response to receipt of an input signal indicative of a termination of the information reading or recording from or on the optical disc 15 and also to permit a supply of the electric current from the backup power source 18 to the focusing coil 3 and the motor 21, the supply of the electric current to the motor 21 being initiated after passage of a predetermined time sufficient to allow the lens holder 2 and, hence, a movable unit to move in the direction A away from the optical disc 15 as a result of the supply of the electric current to the focusing coil 3 whereas the supply of the electric current to the focusing coil 3 and the motor 21 is interrupted after the shutter 25 completes its selective opening and closing operation.

Accordingly, the movable unit is constituted by the objective lens assembly 1, the lens holder 2 and their associated component parts while a stationary unit is constituted by the actuator base 30 and its associated component parts, and a support means is constituted by the lens holder 2 and the shaft 6 axially slidably and rotatably extending through the lens holder 2. A drive means for driving the objective lens assembly 1 in the focusing direction F is constituted by the focusing coil 3 and the focusing magnet 7, whereas a drive means for driving the objective lens assembly 1 in the tracking direction T is constituted by the tracking coil 4 and the tracking magnet 8.

The worm gear 22 and the worm wheel 23 altogether constitutes a worm gear assembly for transmitting a drive of the motor 21, and the worm wheel 23, the drive pin 24 and the shutter 25 altogether constitute a cam means for selectively opening and closing the shutter 25.

A means for separating the lens holder 2, that is, the movable unit, away from the optical disc 15 is concurrently served by the focusing coil 3 and the focusing magnet 7 which form the drive means for driving the objective lens assembly in the focusing direction F.

As best shown in Fig. 12, the shutter 25 is rotatable between a first position, shown by the solid line and in which the shutter 25 is clear from and is hence in position to open the opening 20a, and a second position shown by the phantom line and in which the shutter 25 is in position to close the opening 20.

The lens drive mechanism of the above described construction according to the second preferred embodiment of the present invention operates in the following manner.

In the first place, the drive of the objective lens assembly 1 in the focusing direction F will be described with particular reference to Figs. 12 and 13. When an electric power is supplied across the focusing coil 3 fixed to the lens holder carrying the objective lens assembly 1, by the electromagnetism created by the electric current flowing across the focusing coil 3 and the magnetic flux produced by the focusing magnet 7 fixed to the actuator base 30, the focusing coil 3 receives an electromagnetic force acting in a direction parallel to the direction K of the optical axis of the objective lens assembly so that the lens holder 2 supported by the shaft 6 fixed at one end to the actuator base 30 is slidingly moved in a direction parallel to the direction of the optical axis K, thereby driving the objective lens assembly 1 in the direction of the optical axis K thereof.

The drive of the objective lens assembly 1 in the tracking direction T is accomplished when the electric power is supplied across the tracking coil 4 fixed to the lens holder 2 carrying the objective lens assembly 1. More specifically, when the electric power flows across the tracking coil 4, by the magnetism created by the electric current flowing across the tracking coil 4 and the magnetic flux produced by the tracking magnet 8 mounted on the actuator base 30, the tracking coil 4 receives an electromagnetic force acting around the shaft 6 and is therefore driven around the shaft 6 fixed at one end to the actuator base 30.

The operation of the shutter 25 which takes place in the event of the failure to supply the electric power will now be described with reference to Figs. 12 to 14 as applicable to the case where, while the focusing direction F lies parallel to the direction in which the gravitational force acts, information is recorded on or read from the opposite surfaces of the optical disc 15.

Assuming that the control in the focusing direction F is taking place, no electric current is supplied to the motor 21 and, hence, the worm gear 22 is not driven. In this condition, the worm wheel 23 is held at the position where the stopper pin 28 is engaged to the stopper 27a. Accordingly, the shutter 25 is held at an open position at which the shutter 25 is clear from the opening 20a in the covering 20 as shown by the solid line in Fig. 12.

However, at the time of termination of the information recording or reading, the controller 29 shown in Fig. 9 receives a signal indicative of the termination of the information recording or reading and, in response thereto, causes the power source 17 to supply a direct current flowing required to drive the lens holder 2 and, hence, the movable unit in the direction A away from the optical disc 15. Thus, after the predetermined time required to establish this condition, the supply of the electric current from the power source 17 to the motor 21 is initiated by the controller 29 and the motor 21 is powered to drive the worm wheel 23 in a direction required for the stopper pin 28 to abut against the stopper 27b. In this way, the worm wheel 23 is driven up until the stopper pin 28 is brought into engagement with the stopper 27b, causing the shutter 25 to rotate from the open position towards a closed position shown by the phantom line in Fig. 12 to close the opening 20a in the covering 20. Thereafter, the supply of the electric power from the power source 17 to the motor 21 and the focusing coil 3 is interrupted. As the supply of the electric current to the motor 21 and the focusing coil 3 is interrupted, the worm gear 22 is brought to a halt and the worm wheel 23 is retained at the position with the stopper pin 28 engaged to the stopper 27b. Accordingly, the shutter 25 is held at the closed position with the opening 20a in the covering 20 consequently closed by the shutter 25 as shown by the phantom line in Fig. 12.

On the other hand, should the power source 17 abruptly fail to supply the electric power during the information recording or reading by some reason, the voltage of the power source 17 being monitored by the controller 29 drops and the signal indicative of the voltage drop is then inputted. As a result thereof, the focusing coil 3 is supplied with the direct current, flowing in a direction required to move the lens holder 2 and, hence, the movable unit away from the optical disc 15, from the backup power source 18 and, therefore, the objective lens assembly 1 is separated from the optical disc 15. After the predetermined time required to establish this condition, the supply of the electric current from the backup power source 18 to the motor 21 is initiated by the controller 29 and the motor 21 is powered to drive the worm wheel 23 in a direction required for the stopper pin 28 to abut against the stopper 27b. In this way, the worm wheel 23 is driven up until the stopper pin 28 is brought into engagement with the stopper 27b, causing the shutter 25 to rotate from the open position towards a closed position shown by the phantom line in Fig. 12 to close the opening 20a in the covering 20. Thereafter, the supply of the electric power from the backup power source 18 to the motor 21 and the focusing coil 3 is interrupted. As the supply of the electric current to the motor 21 and the focusing coil 3 is interrupted, the worm gear 22 is brought to a halt and the worm wheel 23 is retained at the position with the stopper pin 28 engaged to the stopper 27b. Accordingly, the shutter 25 is held at the closed position with the opening 20a in the covering 20 consequently closed by the shutter 25 as shown by the phantom line in Fig. 12.

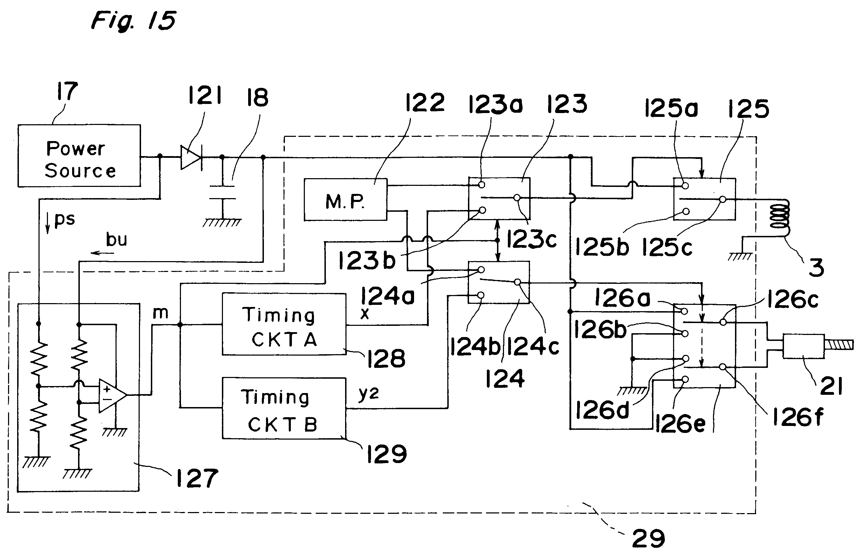

Reference is now made to Figs. 15 to 17. Particularly in Fig. 15, reference numeral 121 represents a diode; reference character ps represents an output signal from the power source 17; and reference character bu represents an output signal from the backup power source 18. The controller 29 shown therein includes a microprocessor (M.P.) 121 operable to cause the power source 17 to supply the electric power, required to separate the lens holder 2 away from the optical disc 15 in the direction A, to the focusing coil 3 when the signal indicative of the termination of the information recording or reading on or from the optical disc 15 is inputted and also to output an electric signal necessary to supply the electric power, required to operate the shutter 25, from the power source 17 to the motor 21 after a predetermined time required for the lens holder 2 to move in the direction A away from the optical disc 15.

The controller 29 also includes a first switch 123 having terminals 123a, 123b and 123c; a second switch 124 having terminals 124a, 124b and 124c; a third switch 125 having terminals 125a, 125b and 125c; a fourth switch 126 having terminals 126a, 126b, 126c, 126d, 126e and 126f; and a voltage monitor 127 comprising at least four resistors and a comparator for monitoring the voltage of the power source 17 and operable to receive the output signals ps and bu respectively from the power source 17 and the backup power source 18 so that, when the voltage of the power source 17 is higher and lower than a predetermined level, high and low level signals m can be outputted therefrom, respectively. This controller 29 further includes a timing circuit A 128 operable in response to an output signal from the voltage monitor 127 to output an electric signal x and a second timing circuit B 129 operable in response to a signal fed from the voltage monitor 127 to output an electric signal y therefrom. The microprocessor 112 has an output connected with the terminals 123a and 124a, the first timing circuit A 128 has an output connected with the terminal 123b, and the timing circuit B 129 has an output connected with the terminal 124b. The terminals 125a, 126a and 126e are connected with the power source 17 or the backup power source 18, a switching between the power source 17 and the backup power source 18 being accomplished by the diode 121. The switches 123 and 124 performs a switching operation in response to a command represented by the signal fed from the voltage monitor 127, the switch 125 performs a switching operation in response to a command represented by a signal fed from the switch 123, and the switch 126 performs a switching operation in response to a command represented by a signal fed from the switch 124.

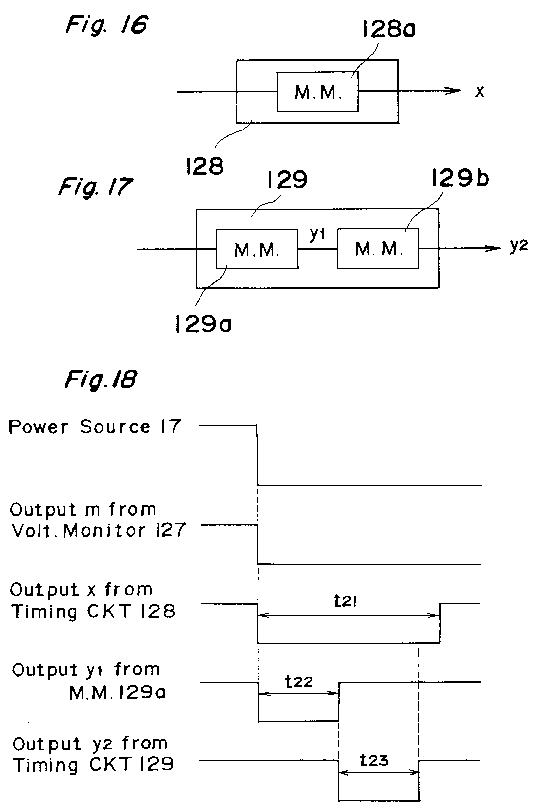

Referring to Fig. 16, reference numeral 128a represents a monostable multivibrator (M.M.), and the timing circuit A 128 shown in Fig. 15 is constituted by at least one monostable multivibrator 128a. In Fig. 17, reference numerals 129a and 129b represent respective monostable multivibrators which form the timing circuit B 129. Reference character y1 represents an output from the monostable multivibrator 129a which is inputted to the monostable multivibrator 129b.

The circuit shown in Fig. 15 necessitated to operate the shutter 25 for the lens drive mechanism operates in the following manner. In the first place, the operation of the timing circuit A 118 shown in Fig. 16 and that shown in Fig. 17 will be discussed with reference to Fig. 18.

The output m generated from the voltage monitor 127 when the voltage of the power source 17 drops is of a waveform as shown in Fig. 18. At this time, the output x generated from the timing circuit A 128 in response to receipt of the output m from the voltage monitor 127 is of a waveform as shown in Fig. 18. In other words, the output x assumes a low level state only during a predetermined length of time t21 after the output m from the voltage monitor 127 has been rendered in a low level state. On the other hand, the output y1 generated from the monostable multivibrator 129 of the timing circuit B 129 in response to receipt of the output m from the voltage monitor 127 is of a waveform as shown in Fig. 18 In other words, the output y1 assumes a low level state only during a predetermined length of time t22 after the output m has been rendered in the low level state. The output from the monostable multivibrator 129b of the timing circuit B 129, that is, the output y2 from the timing circuit B 129, generated in response to receipt of the output y1 from the monostable multivibrator 129a is of a waveform as shown in Fig. 18. In other words, the output y2 assumes a low level state only during a predetermined length of time t23 after the output y1 has changed from the low level state to a high level state. It is to be noted that the predetermined length of time t22 corresponds to the time required for the lens holder 2 to separate away from the optical disc 15 in the direction A, the predetermined length of time t23 corresponds to the time required for the shutter 25 to perform the opening or closing operation, and the predetermined length of time t21 is of a value greater than the sum of the times t22 and t23.

Referring now to Fig. 15, since the voltage of the power source 17 is generally higher than the predetermined level during the operation at the time of termination of the information recording or reading, the output m remains in the high level state. Accordingly, in response to a command represented by the output m from the voltage monitor 127, a switch 154 is held in position with its terminals 123a and 123c connected together and the switch 124 is held in position with its terminals 124a and 124c connected together. When the signal indicative of the termination of the information recording or reading is inputted to the microprocessor 122 in the controller 29, the output from the microprocessor 122 is supplied to the switch 125 through the switch 123 as a command and, therefore, the terminals 125a and 125c are connected only during the time t21. After the time t22 subsequent to the microprocessor 122 having received the signal indicative of the termination of the information recording or reading, the output from the microprocessor 122 is supplied as a command to the switch 126 and, therefore, only during the time t23, the terminals 126a and 126d are connected with the terminals 126c and 126f. In view of this, when the signal indicative of the termination of the information recording or reading is inputted to the microprocessor 122, the direct current required to move the lens holder 2 away from the optical disc 15 is supplied from the power source 17 to the focusing coil 3 through the switch 125. Also, after the time t21 required for the lens holder 2 to be sufficiently separated from the optical disc 15, the direct current required to drive the shutter 25 to the Closed position to close the opening 20a in the actuator covering 20 is supplied from the power source 17 to the motor 21 through the switch 126 and, after the time t23 required for the shutter 25 to complete its operation, the connection of the terminals of the switch 126 is released followed by a release of the connection of the terminals of the switch 125.

In the event of the failure of the power source 17 to supply the electric power by some reason during the information recording or reading, the voltage of the power source 17 is lowered down to a level lower than the predetermined level and, therefore, the output m is rendered in a low level state, causing the switch 123 and the switch 124 to connect the terminals 123b and 123c together and the terminals 124b and 124c together in response to the command represented by the output m. At the same time, the output x is supplied as a command to the switch 125 through the switch 123 and, consequently, the terminals 125a and 125d are connected together only during the time t21. Also, the output y2 is supplied as a command to the switch 126 through the switch 124 so that, after the passage of the time t22 subsequent to the failure of the power source 17, the terminals 126a and 126d are connected with the terminals 126c and 126f and, after the length of time t23, the connection between the terminals 126a and 126c and that between the terminals 126d and 126f are released. Thus, the failure of the power source 17 to supply the electric power causes the backup power source 18 to effect the supply of the electric power to the focusing coil 3 through the switch 125 to drive the lens holder 2 in the direction A away from the optical disc 15 and, after the predetermined time t21 required for the lens holder 2 to be completely separated from the optical disc 15, the direct current is supplied from the backup power source 18 to the motor 21 through the switch 126 to drive the shutter 25 to the closed position. Then, after the predetermined time t23 required for the shutter 25 to complete its movement towards the closed position, the connection of the terminals of the switch 126 is released, followed by a release of the connection of the terminals of the switch 125.

As hereinabove described, according to the second preferred embodiment of the present invention, the provision of the shutter, the motor, the worm gear and the worm wheel is effective to drive the movable unit from the optical disc at the time of the failure of the power source and then to drive the shutter to the closed position closing the opening in the actuator covering. Therefore, even though the objective lens assembly is disposed above the optical disc, any possible collision between the objective lens assembly and the optical disc can advantageously be avoided.

Also, the use of the worm gear and the worm wheel as a means for driving the shutter substantially eliminates the possibility of the worm gear being driven by the motor at any time other than the timing at which the shutter is required to perform its operation. Accordingly, at any time other than the timing at which the shutter is required to perform its operation, the position of the shutter is defined by the worm wheel and, therefore, the motor requires no electric power supply. This substantially minimizes the electric power consumption.

In addition, since the position of the shutter is retained by the gear, the shutter can be assuredly retained at the required position without being affected by external vibrations, thereby making it possible to provide the shutter which is reliable in operation and which can be retained at the required position.

Since the shutter is held in the closed position at any time other than the focusing control taking place, the lens drive mechanism of the present invention has a relatively high resistance to dust with an increased reliability in operation.

In describing the second preferred embodiment of the present invention, the lens drive mechanism has been described as having a capability of driving the objective lens assembly in two directions, i.e., the focusing and tracking directions F and T. However, the present invention can equally apply to a lens drive mechanism designed to drive the objective lens assembly only in one direction, i.e., in the focusing direction F.

It is also to be noted that, while the support mechanism for the lens holder has been shown as an axially slidable and rotatable support type, the support mechanism employable in the present invention may be of a type utilizing an elastic member having a function of elastically returning to the neutral point or a hinge because, if the force of returning to the neutral point is chosen to be relatively great, the region in which a linearity of displacement of the movable unit relative to the input current tends to be reduced and it is difficult to impart to the support mechanism the returning force necessary to separate the objective lens assembly away from the optical disc.

In the foregoing second embodiment of the present invention, the shutter starts its operation after the lens holder, that is, the movable unit, has been moved in the direction A away from the optical disc in the event of the failure of the power source to supply the electric power. However, arrangement may be made such that the shutter may start its operation in the event that the focusing servo deviates and, in such case, the reliability can be increased.

The selective opening and closure of the shutter may be initiated subsequent to the completion of the movement of the movable unit away from the optical disc and, for this purpose, the use may be made of a sensor or the like to detect the completion of the movement of the movable unit away from the optical disc or the use may be made of a delay time greater than the time required to complete the movement of the movable unit away from the optical disc.

Moreover, although in the foregoing embodiment it has been described that the shutter starts its operation at the time of any one of the termination of the information recording or reading or in the event of the abrupt failure of the power source to supply the electric power, arrangement may be made such that the shutter can start its operation only at the time of termination of the information recording or reading or in the event of the failure of the power source to supply the electric power.

Preferably, the operation of the shutter to open the opening in the covering be accomplished by driving the shutter so as to rotate after the objective lens assembly has been moved in the direction away from the optical disc.

Where the optical disc has not yet been mounted on the spindle motor before the shutter opens the opening in the covering, the operation of the shutter to open the opening in the covering should be initiated after the optical disc has been mounted on the spindle motor and the rotation of the spindle motor has subsequently been stabilized. On the other hand, where the optical disc is mounted on the spindle motor before the shutter opens the opening in the covering, the operation of the shutter to open the opening in the covering should be initiated subsequent to the stabilization of the rotation of the spindle motor.

At the time of the shutter opening the opening in the covering, the focusing servo should be pulled in by bringing the objective lens assembly, then separated from the optical disc, progressively towards the optical disc after the completion of the supply of the electric power to the motor subsequent to the retention of the shutter at the open position.

The dust-proof effect exhibited by the shutter according to the second embodiment of the present invention can be appreciated not only in the lens drive mechanism disposed for each of the opposite surfaces of the optical disc, but also in the lens drive mechanism disposed in any manner with respect to the optical disc. For example, where, while the focusing direction F lies parallel to the direction in which the gravitational force acts, the lens drive mechanism is disposed beneath the optical disc, the movable unit can move downwards by its own weight in the event of the failure of the power source to supply the electric power during the information recording or reading or at the time of completion of the information recording or reading.

Yet, instead of the use of the microprocessor, a digital signal processor may be employed in the practice of the present invention.

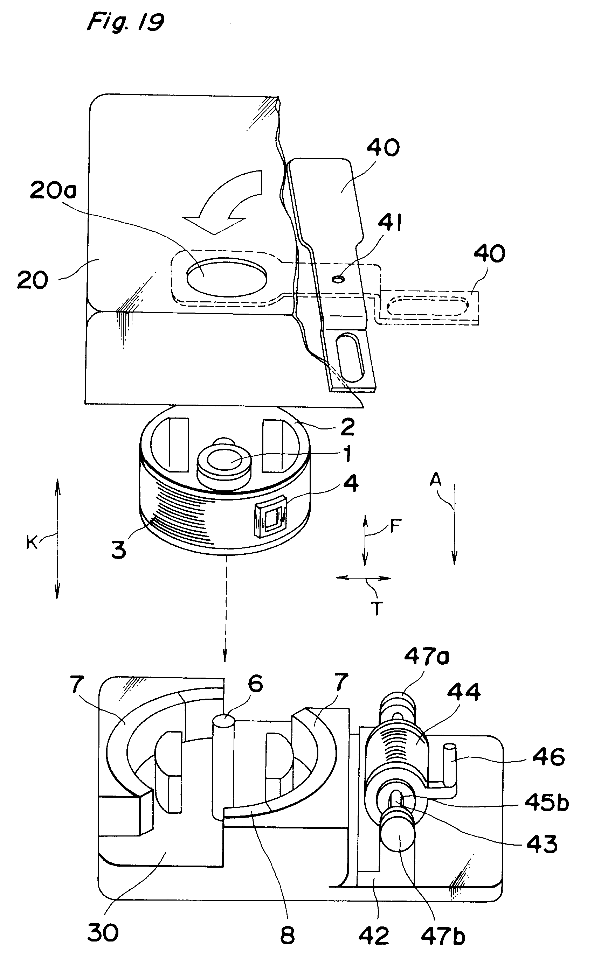

### Third Embodiment (Figs. 19 to 29)

Referring to Figs. 19 to 24, reference character F represents a focusing direction; reference character T represents a tracking direction; reference numeral 1 represents an objective lens assembly; reference numeral 2 represents a lens holder enclosing the objective lens assembly 1; reference numeral 3 represents a focusing coil wound on an outer peripheral surface of the lens holder 2 about a winding axis parallel to the direction K of the optical axis; reference numeral 4 represents a tracking coil mounted on the lens holder 2 and wound about an winding axis perpendicular to the direction K of the optical axis; reference numeral 30 represents an actuator base; reference numeral 6 represents a shaft connected rigidly at one end to the actuator base 30 and extending axially movably and rotatably through the lens holder 2; reference numeral 7 represents a focusing magnet secured to the actuator base 30 at a position confronting the focusing coil 3 for generating a magnetic flux in a direction perpendicular to the winding axis of the focusing coil 3; reference numeral 8 represents a tracking magnet secured to the actuator base 30 at a position confronting the tracking coil 4 for generating a magnetic flux in a direction parallel to the winding axis of the tracking coil 4; reference numeral 20 represents a covering mounted on the actuator base 30 so as to enclose the lens drive mechanism as a whole and having an opening 20a defined therein at a location confronting the objective lens assembly 1; reference numeral 40 represents a shutter rotatable about an axis parallel to the direction K of the optical axis and having a groove defined therein; reference numeral 41 represents a pivot pin secured to the covering 20 and about which the shutter 40 rotates; reference numeral 42 represents a shutter drive base made of non-magnetizable material and secured to the actuator base 30; reference numeral 43 represents an iron core of generally oval cross-section having its opposite ends secured to the shutter drive base 42; reference numeral 44 represents an electromagnet assembly wound around an iron core 43 and supported thereon for sliding motion in a direction axially of the iron core 43; reference numerals 45a and 45b represents generally ring-shaped, magnetizable plates rigidly mounted on the respective opposite ends of the electromagnet assembly 44; reference numeral 46 represents a drive pin having one end fixed to the electromagnet assembly 44 and also having the other end received in the groove in the shutter 40 for transmitting a driving force to the shutter 40 to rotate the latter thereabout; and reference numerals 47a and 47b represent respective permanent magnets fixedly mounted on the shutter drive base 42 and having respective pole faces confronting the respective opposite ends of the iron core 43. It is to be noted that the respective pole faces of the permanent magnets 47a and 47b which confronts the opposite ends of the iron core 43 are of the same polarity.

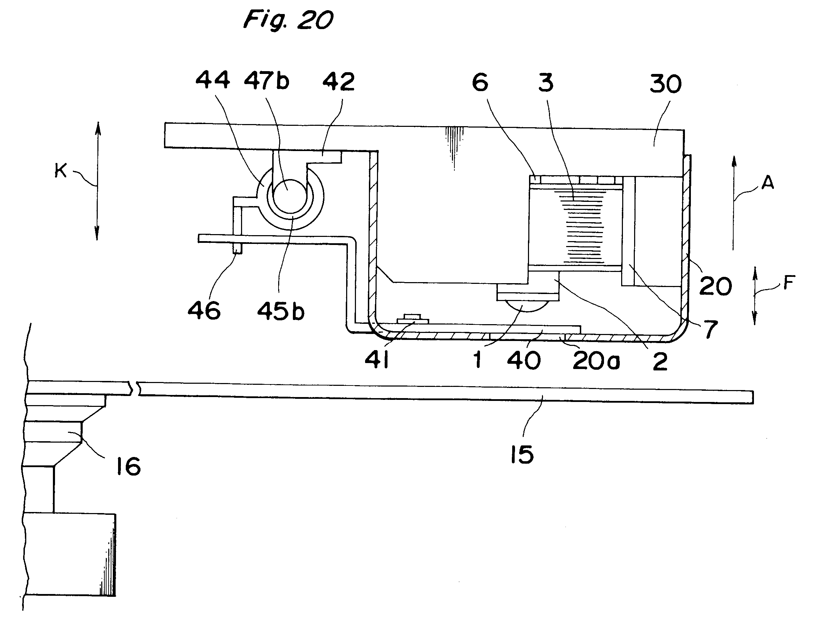

In Fig. 20, reference numeral 15 represents an optical disc; reference numeral 16 represents a spindle motor; and reference character A represents a direction parallel to the direction K of the optical axis and in which the lens holder 2 moves away from the optical disc 15.

A movable unit is constituted by the objective lens assembly 1, the lens holder 2 and their associated component parts while a stationary unit is constituted by the actuator base 30 and its associated component parts, and a support means is constituted by the lens holder 2 and the shaft 6 axially slidably and rotatably extending through the lens holder 2. A drive means for driving the objective lens assembly 1 in the focusing direction F is constituted by the focusing coil 3 and the focusing magnet 7, whereas a drive means for driving the objective lens assembly 1 in the tracking direction T is constituted by the tracking coil 4 and the tracking magnet 8.

The shutter drive base 42, the iron core 43, the electromagnet assembly 44, the magnetizable plates 45a and 45b, the drive pin 46, the permanent magnets 47a and 47b, the shutter 40 and the pivot pin 41 altogether constitute an actuating means for driving the shutter 40 between open and closed positions about the pivot pin 41. This actuating means is so operable and so positioned that, when the electromagnet assembly 44 is, while axially slidably supported around the iron core 43, moved along the iron core 43 in one direction close towards any one of the opposite ends of the iron core 43 until it contacts a portion of the shutter drive base 42, a corresponding one of the magnetizable plates 45a and 45b secured to the respective ends of the electromagnet assembly 44 is magnetically attracted by the respective permanent magnet 47a or 47b through a portion of the shutter drive base 42 to bring the shutter 40 to either the open position, shown by the solid line in Fig. 19 and at which the shutter 40 is clear from the opening 20a in the covering, or the closed position shown by the phantom line in Fig. 19 and at which the shutter 40 closes the opening 20a.

A means for separating the lens holder 2, that is, the movable unit, away from the optical disc 15 is concurrently served by the focusing coil 3 and the focusing magnet 7 which form the drive means for driving the objective lens assembly in the focusing direction F.

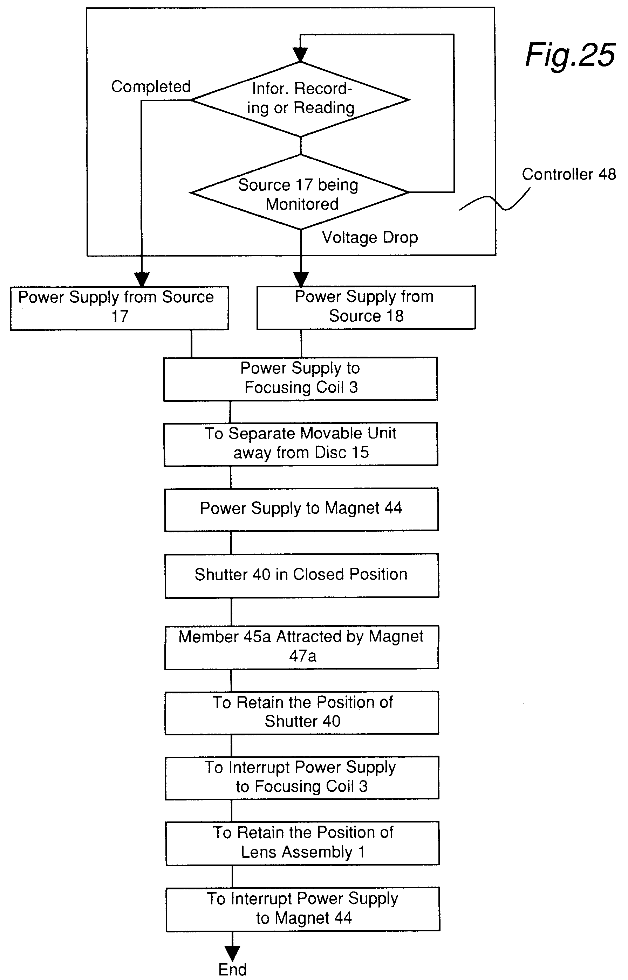

Referring to Fig. 25, reference numeral 17 represents a source of electric power from which an electric current necessary to operate the optical read/write apparatus including the lens drive mechanism; reference numeral 18 represents a backup electric power source constituted by a capacitor or a battery and operable in a manner similar to the power source 18, but in the event of a failure of the power source 17 to operate; and reference numeral 48 represents a controller operable to permit a supply of the electric current from the power source 17 to the focusing coil 3 and the electromagnet assembly 44 in response to receipt of an input signal indicative of a termination of the information reading or recording from or on the optical disc 15 and also to permit a supply of the electric current from the backup power source 18 to the focusing coil 3 and the electromagnet assembly 44, the supply of the electric current to the electromagnet assembly 44 being initiated after passage of a predetermined time sufficient to allow the lens holder 2 and, hence, the movable unit to move in the direction A away from the optical disc 15 as a result of the supply of the electric current to the focusing coil 3 whereas the supply of the electric current to the focusing coil 3 and the electromagnet assembly 44 is interrupted after the shutter 40 completes its selective opening and closing operation.

The lens drive mechanism of the above described construction according to the third preferred embodiment of the present invention operates in the following manner.

In the first place, the drive of the objective lens assembly 1 in the focusing direction F will be described with particular reference to Fig. 19. When an electric power is supplied across the focusing coil 3 fixed to the lens holder carrying the objective lens assembly 1, by the electromagnetism created by the electric current flowing across the focusing coil 3 and the magnetic flux produced by the focusing magnet 7 fixed to the actuator base 30, the focusing coil 3 receives an electromagnetic force acting in a direction parallel to the direction K of the optical axis of the objective lens assembly so that the lens holder 2 supported by the shaft 6 fixed at one end to the actuator base 30 is slidingly moved in a direction parallel to the direction of the optical axis K, thereby driving the objective lens assembly 1 in the direction of the optical axis K thereof.

The drive of the objective lens assembly 1 in the tracking direction T is accomplished when the electric power is supplied across the tracking coil 4 fixed to the lens holder 2 carrying the objective lens assembly 1. More specifically, when the electric power flows across the tracking coil 4, by the magnetism created by the electric current flowing across the tracking coil 4 and the magnetic flux produced by the tracking magnet 8 mounted on the actuator base 30, the tracking coil 4 receives an electromagnetic force acting around the shaft 6 and is therefore driven around the shaft 6 fixed at one end to the actuator base 30.

The operation of the shutter 40 which takes place in the event of the failure to supply the electric power will now be described with reference to Figs. 19 to 25 as applicable to the case where, while the focusing direction F lies parallel to the direction in which the gravitational force acts, the lend drive mechanism is disposed above and below the opposite surfaces of the optical disc 15.

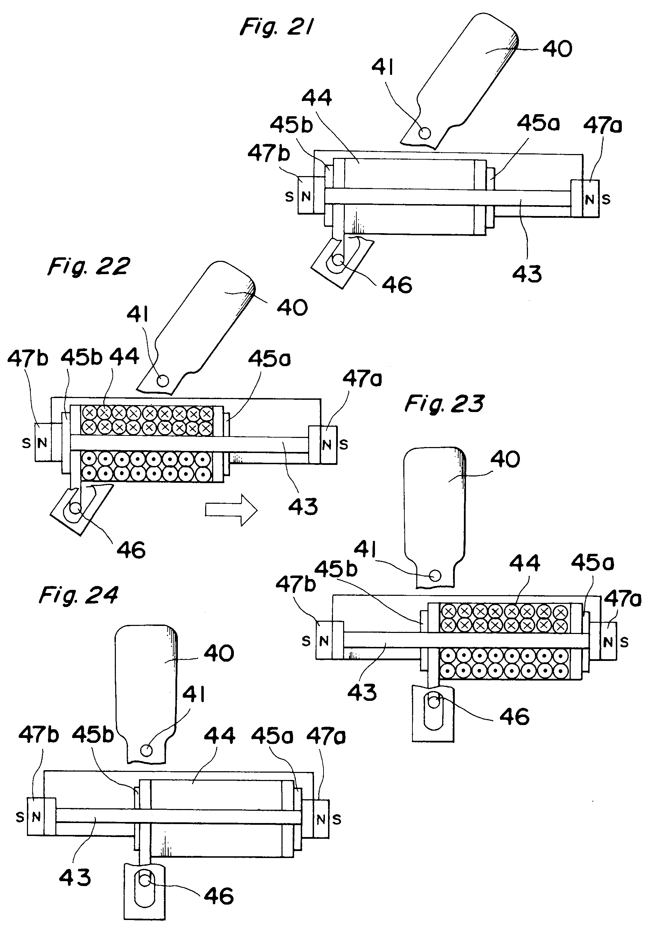

Assuming that the control in the focusing direction F is taking place, no electric current is supplied to the electromagnet assembly 44 and, hence, the electromagnet assembly 44 assumes a position shown in Fig. 21. In this condition, the electromagnet assembly 44 is held in position by the magnetic force developed between the permanent magnet 47b and the magnetizable plate 45b with the shutter 40 consequently held at the open position shown by the solid line in Fig. 19.

However, at the time of termination of the information recording or reading, the controller 48 shown in Fig. 25 receives a signal indicative of the termination of the information recording or reading and, in response thereto, causes the power source 17 to supply a direct current flowing required to drive the lens holder 2 and, hence, the movable unit in the direction A away from the optical disc 15 and, hence, the objective lens assembly 1 is separated away from the optical disc 15. Thus, after the predetermined time required to establish this condition, the supply of the direct current flowing in such a direction as shown in Fig. 22 from the power source 17 to the electromagnet assembly 44 is initiated by the controller 48. By the action of the magnetic repulsive force developed between the electromagnet assembly 44 and the permanent magnet 47b and the magnetic attractive force developed between the electromagnet assembly 44 and the permanent magnet 47a, the electromagnet assembly 44 receives a force acting in a direction shown by the arrow in Fig. 22 and is therefore moved in a direction shown by the arrow in Fig. 22, causing the drive pin 46 to act on the shutter 40 to rotate the latter. When the electromagnet assembly 44 is moved to such a position as shown in Fig. 23, the electromagnet assembly 44 is retained in that position by the action of the magnetic force developed between the permanent magnet 47a and the magnetizable plate 45a while the shutter 40 is rotated to and retained at the closed position, as shown by the phantom line in Fig. 19, to close the opening 20a in the covering 20. After the shutter 40 has been retained in the closed position, the supply of the electric current from the power source 17 to the focusing coil 3 is subsequently interrupted, followed by an interruption of the supply of the electric power to the electromagnet assembly 44. Although the lens holder 2 tends to fall downwards by gravity towards the optical disc 15 when the electric power supply to the focusing coil 3 is interrupted, the closure of the opening 20a in the covering 20 by the shutter 40 then held at the closed position results in a retention of the objective lens assembly 1 at a position spaced a distance away from the optical disc 15.

On the other hand, should the power source 17 abruptly fail to supply the electric power during the information recording or reading by some reason, the voltage of the power source 17 being monitored by the controller 48 drops and the signal indicative of the voltage drop is then inputted. As a result thereof, the focusing coil 3 is supplied with the direct current, flowing in a direction required to move the lens holder 2 and, hence, the movable unit away from the optical disc 15, from the backup power source 18 and, therefore, the objective lens assembly 1 is separated from the optical disc 15. After the predetermined time required to establish this condition, the supply of the electric current from the backup power source 18 to the electromagnet assembly 44 is initiated by the controller 48 and the electromagnet assembly 44 is powered. Then, by the action of the magnetic repulsive force developed between the electromagnet assembly 44 and the permanent magnet 47b and the magnetic attractive force developed between the electromagnet assembly 44 and the permanent magnet 47a, the electromagnet assembly 44 receives a force acting in a direction shown by the arrow in Fig. 22 and is therefore moved in a direction shown by the arrow in Fig. 22, causing the drive pin 46 to act on the shutter 40 to rotate the latter. When the electromagnet assembly 44 is moved to such a position as shown in Fig. 23, the electromagnet assembly 44 is retained in that position by the action of the magnetic force developed between the permanent magnet 47a and the magnetizable plate 45a while the shutter 40 is rotated to and retained at the closed position, as shown by the phantom line in Fig. 19, to close the opening 20a in the covering 20. After the shutter 40 has been retained in the closed position, the supply of the electric current from the power source 17 to the focusing coil 3 is subsequently interrupted, followed by an interruption of the supply of the electric power to the electromagnet assembly 44. Although the lens holder 2 tends to fall downwards by gravity towards the optical disc 15 when the electric power supply to the focusing coil 3 is interrupted, the closure of the opening 20a in the covering 20 by the shutter 40 then held at the closed position results in a retention of the objective lens assembly 1 at a position spaced a distance away from the optical disc 15.

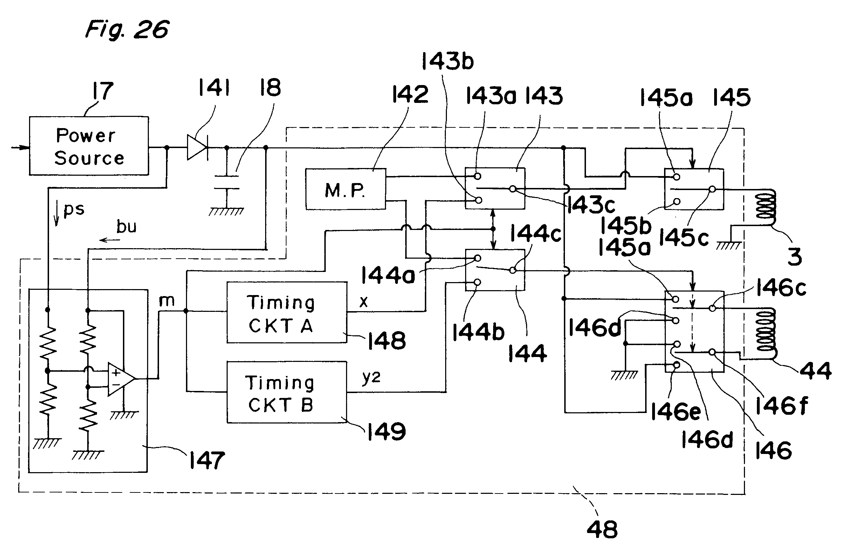

Reference is now made to Figs. 26 to 28. Particularly in Fig. 26, reference numeral 141 represents a diode; reference character ps represents an output signal from the power source 17; and reference character bu represents an output signal from the backup power source 18. The controller 48 shown therein includes a microprocessor (M.P.) 142 operable to cause the power source 17 to supply the electric power, required to separate the lens holder 2 away from the optical disc 15 in the direction A, to the focusing coil 3 when the signal indicative of the termination of the information recording or reading on or from the optical disc 15 is inputted and also to output an electric signal necessary to supply the electric power, required to operate the shutter 40, from the power source 17 to the electromagnet assembly 44 after a predetermined time required for the lens holder 2 to move in the direction A away from the optical disc 15.

The controller 48 also includes a first switch 143 having terminals 143a, 143b and 143c; a second switch 144 having terminals 144a, 144b and 144c; a third switch 145 having terminals 145a, 145b and 145c; a fourth switch 146 having terminals 146a, 146b, 146c, 146d, 146e and 146f; and a voltage monitor 127 comprising at least four resistors and a comparator for monitoring the voltage of the power source 17 and operable to receive the output signals ps and bu respectively from the power source 17 and the backup power source 18 so that, when the voltage of the power source 17 is higher and lower than a predetermined level, high and low level signals m can be outputted therefrom, respectively. This controller 48 further includes a timing circuit A 148 operable in response to an output signal from the voltage monitor 127 to output an electric signal x and a second timing circuit B 149 operable in response to a signal fed from the voltage monitor 127 to output an electric signal y therefrom. The microprocessor 142 has an output connected with the terminals 143a and 144a, the first timing circuit A 148 has an output connected with the terminal 143b, and the timing circuit B 149 has an output connected with the terminal 144b. The terminals 145a, 146a and 146e are connected with the power source 17 or the backup power source 18, a switching between the power source 17 and the backup power source 18 being accomplished by the diode 141. The switches 143 and 144 performs a switching operation in response to a command represented by the signal fed from the voltage monitor 127, the switch 145 performs a switching operation in response to a command represented by a signal fed from the switch 143, and the switch 146 performs a switching operation in response to a command represented by a signal fed from the switch 144.

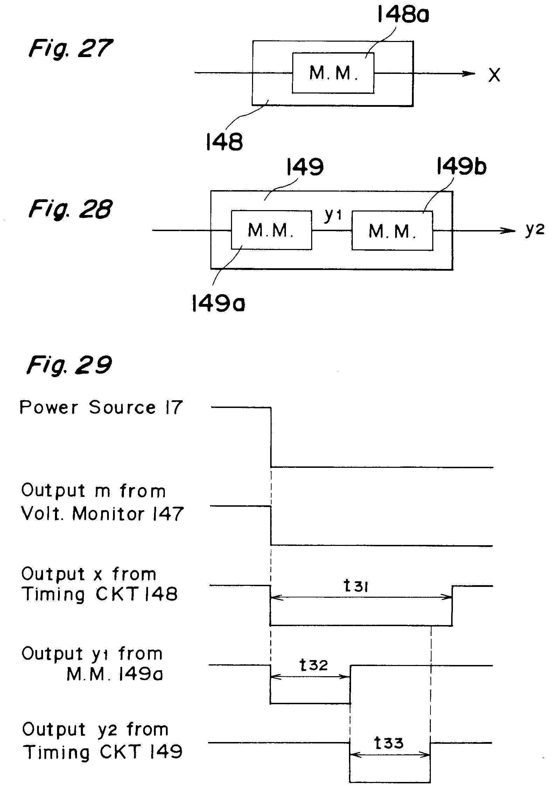

Referring to Fig. 27, reference numeral 148a represents a monostable multivibrator (M.M.), and the timing circuit A 148 shown in Fig. 26 is constituted by at least one monostable multivibrator 148a. In Fig. 28, reference numerals 149a and 149b represent respective monostable multivibrators which form the timing circuit B 149. Reference character y1 represents an output from the monostable multivibrator 149a which is inputted to the monostable multivibrator 149b.

The circuit shown in Fig. 26 necessitated to operate the shutter 40 for the lens drive mechanism operates in the following manner. In the first place, the operation of the timing circuit A 118 shown in Fig. 27 and that shown in Fig. 28 will be discussed with reference to Fig. 29.

The output m generated from the voltage monitor 127 when the voltage of the power source 17 drops is of a waveform as shown in Fig. 29. At this time, the output x generated from the timing circuit A 148 in response to receipt of the output m from the voltage monitor 127 is of a waveform as shown in Fig. 29. In other words, the output x assumes a low level state only during a predetermined length of time t31 after the output m from the voltage monitor 127 has been rendered in a low level state. On the other hand, the output y1 generated from the monostable multivibrator 149 of the timing circuit B 149 in response to receipt of the output m from the voltage monitor 127 is of a waveform as shown in Fig. 29 In other words, the output y1 assumes a low level state only during a predetermined length of time t32 after the output m has been rendered in the low level state. The output from the monostable multivibrator 149b of the timing circuit B 149, that is, the output y2 from the timing circuit B 149, generated in response to receipt of the output y1 from the monostable multivibrator 149a is of a waveform as shown in Fig. 29. In other words, the output y2 assumes a low level state only during a predetermined length of time t33 after the output y1 has changed from the low level state to a high level state. It is to be noted that the predetermined length of time t32 corresponds to the time required for the lens holder 2 to separate away from the optical disc 15 in the direction A, the predetermined length of time t33 corresponds to the time required for the shutter 40 to perform the opening or closing operation, and the predetermined length of time t31 is of a value greater than the sum of the times t32 and t33.

Referring now to Fig. 26, since the voltage of the power source 17 is generally higher than the predetermined level during the operation at the time of termination of the information recording or reading, the output m remains in the high level state. Accordingly, in response to a command represented by the output m from the voltage monitor 127, a switch 154 is held in position with its terminals 143a and 143c connected together and the switch 144 is held in position with its terminals 144a and 144c connected together. When the signal indicative of the termination of the information recording or reading is inputted to the microprocessor 142 in the controller 48, the output from the microprocessor 142 is supplied to the switch 145 through the switch 143 as a command and, therefore, the terminals 145a and 145c are connected only during the time t31. After the time t32 subsequent to the microprocessor 142 having received the signal indicative of the termination of the information recording or reading, the output from the microprocessor 142 is supplied as a command to the switch 146 and, therefore, only during the time t33, the terminals 146a and 146d are connected with the terminals 146c and 146f. In view of this, when the signal indicative of the termination of the information recording or reading is inputted to the microprocessor 142, the direct current required to move the lens holder 2 away from the optical disc 15 is supplied from the power source 17 to the focusing coil 3 through the switch 145. Also, after the time t31 required for the lens holder 2 to be sufficiently separated from the optical disc 15, the direct current required to drive the shutter 40 to the closed position to close the opening 20a in the actuator covering 20 is supplied from the power source 17 to the electromagnet assembly 44 through the switch 146 and, after the time t33 required for the shutter 40 to complete its operation, the connection of the terminals of the switch 146 is released followed by a release of the connection of the terminals of the switch 145.

In the event of the failure of the power source 17 to supply the electric power by some reason during the information recording or reading, the voltage of the power source 17 is lowered down to a level lower than the predetermined level and, therefore, the output m is rendered in a low level state, causing the switch 143 and the switch 144 to connect the terminals 143b and 143c together and the terminals 144b and 144c together in response to the command represented by the output m. At the same time, the output x is supplied as a command to the switch 145 through the switch 143 and, consequently, the terminals 145a and 145d are connected together only during the time t31. Also, the output y2 is supplied as a command to the switch 146 through the switch 144 so that, after the passage of the time t32 subsequent to the failure of the power source 17, the terminals 146a and 146d are connected with the terminals 146c and 146f and, after the length of time t33, the connection between the terminals 146a and 146c and that between the terminals 146d and 146f are released. Thus, the failure of the power source 17 to supply the electric power causes the backup power source 18 to effect the supply of the electric power to the focusing coil 3 through the switch 145 to drive the lens holder 2 in the direction A away from the optical disc 15 and, after the predetermined time t31 required for the lens holder 2 to be completely separated from the optical disc 15, the direct current is supplied from the backup power source 18 to the electromagnet assembly 44 through the switch 146 to drive the shutter 40 to the closed position. Then, after the predetermined time t33 required for the shutter 40 to complete its movement towards the closed position, the connection of the terminals of the switch 146 is released, followed by a release of the connection of the terminals of the switch 145.

As hereinabove described, according to the third preferred embodiment of the present invention, the provision of the electromagnet assembly and the two permanent magnets is effective to drive the movable unit from the optical disc at the time of the failure of the power source and then to drive the shutter to the closed position closing the opening in the actuator covering. Therefore, even though the objective lens assembly is disposed above the optical disc, any possible collision between the objective lens assembly and the optical disc can advantageously be avoided.

Also, the use of the electromagnet assembly and the two permanent magnets as a means for driving the shutter substantially eliminates the necessity of the supply of the electric current to the electromagnet assembly at any time other than when the shutter performs its selective opening and closing operation since the shutter can be retained at the required position by the action of the magnetic attractive force developed between a corresponding one of the permanent magnets and the iron core. Accordingly, this substantially minimizes the electric power consumption.

At any time other than during the focus control taking place, the shutter is held in the closed position, thereby to provide a relatively high dust-proof effect.

In describing the third embodiment of the present invention, the iron core has been described as having a generally oval cross-section. However, the present invention may not be limited thereto provided that the electromagnet assembly is supported on the iron core for axial movement without being rotated. Therefore, instead of the employment of the oval-sectioned iron core, a round-sectioned iron core may be employed in combination with any suitable means for avoiding a rotation of the electromagnet assembly around the iron core.

In describing the third preferred embodiment of the present invention, the lens drive mechanism has been described as having a capability of driving the objective lens assembly in two directions, i.e., the focusing and tracking directions F and T. However, the present invention can equally apply to a lens drive mechanism designed to drive the objective lens assembly only in one direction, i.e., in the focusing direction F.

It is also to be noted that, while the support mechanism for the lens holder has been shown as an axially slidable and rotatable support type, the support mechanism employable in the present invention may be of a type utilizing an elastic member having a function of elastically returning to the neutral point or a hinge because, if the force of returning to the neutral point is chosen to be relatively great, the region in which a linearity of displacement of the movable unit relative to the input current tends to be reduced and it is difficult to impart to the support mechanism the returning force necessary to separate the objective lens assembly away from the optical disc.

In the foregoing third embodiment of the present invention, the shutter starts its operation after the lens holder, that is, the movable unit, has been moved in the direction A away from the optical disc in the event of the failure of the power source to supply the electric power. However, arrangement may be made such that the shutter may start its operation in the event that the focusing servo deviates and, in such case, the reliability can be increased.

According to the third embodiment of the present invention, although it has been described that, when the shutter is held in one of the open and closed position, the associated magnetizable plate secured to the electromagnet assembly is magnetically attracted by the corresponding permanent magnet through a portion of the shutter drive base, the magnitude of the magnetic attractive force acting between the respective magnetizable plate and the associated permanent magnet can be adjusted to a desired value by varying the size of the shutter drive base interposed therebetween.

The selective opening and closure of the shutter may be initiated subsequent to the completion of the movement of the movable unit away from the optical disc and, for this purpose, the use may be made of a sensor or the like to detect the completion of the movement of the movable unit away from the optical disc or the use may be made of a delay time greater than the time required to complete the movement of the movable unit away from the optical disc.

Moreover, although in the foregoing embodiment it has been described that the shutter starts its operation at the time of any one of the termination of the information recording or reading or in the event of the abrupt failure of the power source to supply the electric power, arrangement may be made such that the shutter can start its operation only at the time of termination of the information recording or reading or in the event of the failure of the power source to supply the electric power.

Preferably, the operation of the shutter to open the opening in the covering be accomplished by driving the shutter so as to rotate after the objective lens assembly has been moved in the direction away from the optical disc.

Where the optical disc has not yet been mounted on the spindle motor before the shutter opens the opening in the covering, the operation of the shutter to open the opening in the covering should be initiated after the optical disc has been mounted on the spindle motor and the rotation of the spindle motor has subsequently been stabilized. On the other hand, where the optical disc is mounted on the spindle motor before the shutter opens the opening in the covering, the operation of the shutter to open the opening in the covering should be initiated subsequent to the stabilization of the rotation of the spindle motor.

At the time of the shutter opening the opening in the covering, the focusing servo should be pulled in by bringing the objective lens assembly, then separated from the optical disc, progressively towards the optical disc after the completion of the supply of the electric power to the motor subsequent to the retention of the shutter at the open position.

The dust-proof effect exhibited by the shutter according to the second embodiment of the present invention can be appreciated not only in the lens drive mechanism disposed for each of the opposite surfaces of the optical disc, but also in the lens drive mechanism disposed in any manner with respect to the optical disc. For example, where, while the focusing direction F lies parallel to the direction in which the gravitational force acts, the lens drive mechanism is disposed beneath the optical disc, the movable unit can move downwards by its own weight in the event of the failure of the power source to supply the electric power during the information recording or reading or at the time of completion of the information recording or reading.

Yet, instead of the use of the microprocessor, a digital signal processor may be employed in the practice of the present invention.

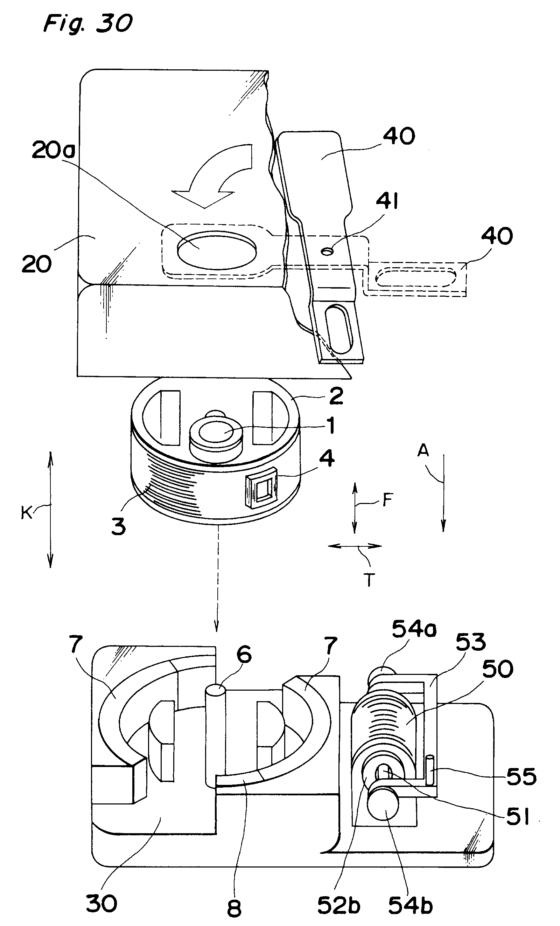

### Fourth Embodiment (Figs. 30 to 40)

Referring to Figs. 30 to 35, reference character F represents a focusing direction; reference character T represents a tracking direction; reference numeral 1 represents an objective lens assembly; reference numeral 2 represents a lens holder enclosing the objective lens assembly 1; reference numeral 3 represents a focusing coil wound on an outer peripheral surface of the lens holder 2 about a winding axis parallel to the direction K of the optical axis; reference numeral 4 represents a tracking coil mounted on the lens holder 2 and wound about an winding axis perpendicular to the direction K of the optical axis; reference numeral 30 represents an actuator base; reference numeral 6 represents a shaft connected rigidly at one end to the actuator base 30 and extending axially movably and rotatably through the lens holder 2; reference numeral 7 represents a focusing magnet secured to the actuator base 30 at a position confronting the focusing coil 3 for generating a magnetic flux in a direction perpendicular to the winding axis of the focusing coil 3; reference numeral 8 represents a tracking magnet secured to the actuator base 30 at a position confronting the tracking coil 4 for generating a magnetic flux in a direction parallel to the winding axis of the tracking coil 4; reference numeral 20 represents a covering mounted on the actuator base 30 so as to enclose the lens drive mechanism as a whole and having an opening 20a defined therein at a location confronting the objective lens assembly 1; reference numeral 40 represents a shutter rotatable about an axis parallel to the direction K of the optical axis and having a groove defined therein; reference numeral 41 represents a pivot pin secured to the covering 20 and about which the shutter 40 rotates; reference numeral 50 represents an electromagnet assembly secured to the actuator base 30; reference numeral 51 represents an iron core of generally oval cross-section extending through the electromagnet assembly 50 in a direction along the axis around which the electromagnet assembly 50 is wound and supported for axial movement by the electromagnet assembly 50; reference numerals 52a and 52b represents generally ring-shaped, magnetizable plates rigidly mounted on the respective opposite ends of the electromagnet assembly 50; reference numeral 53 represents a magnet holder securing the opposite ends of the iron core 51; reference numerals 54a and 54b represent respective permanent magnets fixedly mounted on magnet holder so as to confront opposite pole faces of the iron core 51; and reference numeral 55 represents a drive pin having one end rigidly secured to the magnet holder 53 and the other end engaged in the groove defined in the shutter 40 and operable to transmit a driving force to the shutter 40 to rotate the latter. It is to be noted that the respective pole faces of the permanent magnets 54a and 54b which confronts the opposite ends of the iron core 51 are of the same polarity.

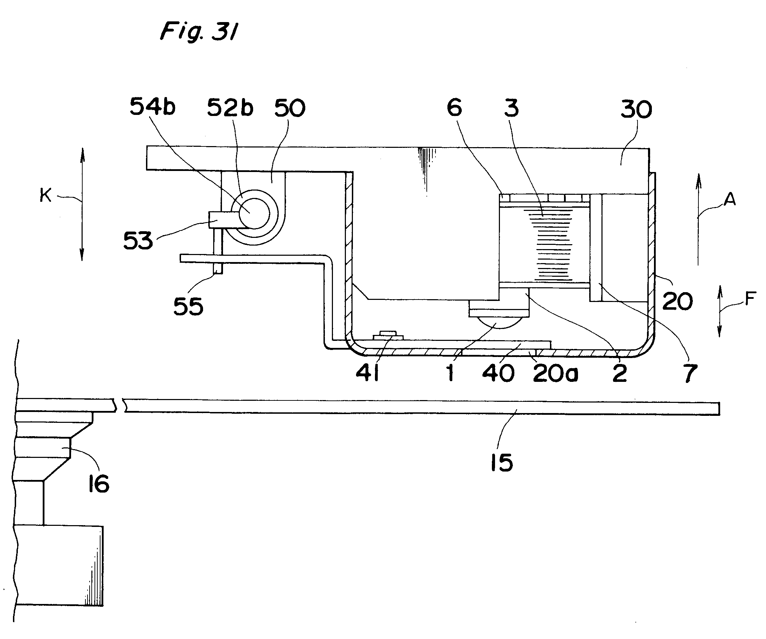

In Fig. 31, reference numeral 15 represents an optical disc; reference numeral 16 represents a spindle motor; and reference character A represents a direction parallel to the direction K of the optical axis and in which the lens holder 2 moves away from the optical disc 15.

A movable unit is constituted by the objective lens assembly 1, the lens holder 2 and their associated component parts while a stationary unit is constituted by the actuator base 30 and its associated component parts, and a support means is constituted by the lens holder 2 and the shaft 6 axially slidably and rotatably extending through the lens holder 2. A drive means for driving the objective lens assembly 1 in the focusing direction F is constituted by the focusing coil 3 and the focusing magnet 7, whereas a drive means for driving the objective lens assembly 1 in the tracking direction T is constituted by the tracking coil 4 and the tracking magnet 8.

An actuating means for driving the shutter 40 between open and closed positions about the pivot pin 41 is constituted by the electromagnet assembly 50, the iron core 51, the magnetizable plates 52a and 52b, the magnet holder 53, the permanent magnets 54a and 54b, the drive pin 55, the shutter 40 and the pivot pin 41. This actuating means is so operable and so positioned that, when the iron core 51 slidably extending through the electromagnet assembly 50 is axially moved in one direction close towards any one of the opposite ends of the electromagnet assembly 50 until it contacts a portion of the magnet holder 53, a corresponding one of the magnetizable plates 52a and 52b secured to the respective ends of the electromagnet assembly 44 is magnetically attracted by the respective permanent magnet 54a or 54b through a portion of the magnet holder 53 to bring the shutter 40 to either the open position, shown by the solid line in Fig. 30 and at which the shutter 40 is clear from the opening 20a in the covering, or the closed position shown by the phantom line in Fig. 30 and at which the shutter 40 closes the opening 20a.

A means for separating the lens holder 2, that is, the movable unit, away from the optical disc 15 is concurrently served by the focusing coil 3 and the focusing magnet 7 which form the drive means for driving the objective lens assembly in the focusing direction F.

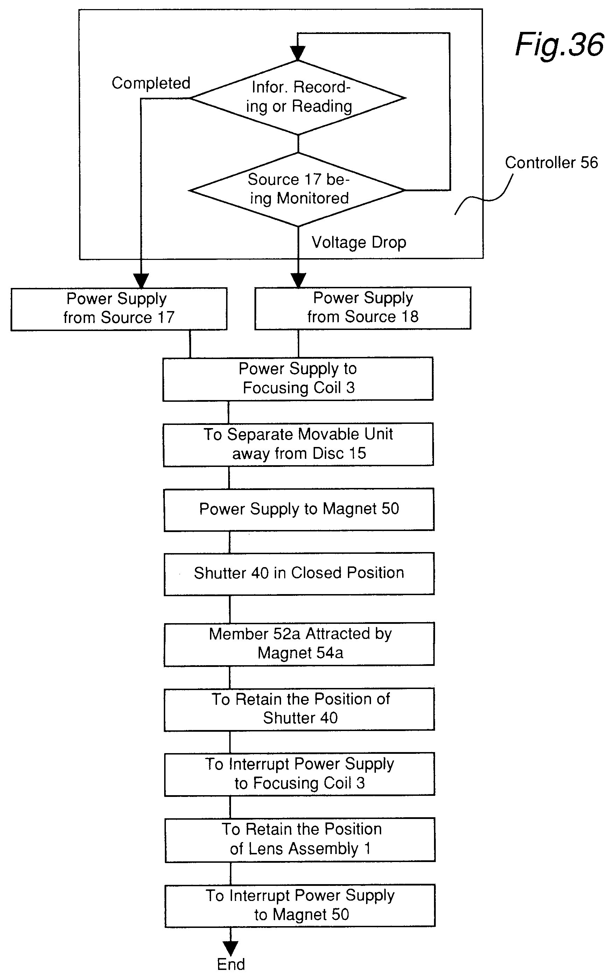

Referring to Fig. 36, reference numeral 17 represents a source of electric power from which an electric current necessary to operate the optical read/write apparatus including the lens drive mechanism; reference numeral 18 represents a backup electric power source constituted by a capacitor or a battery and operable in a manner similar to the power source 18, but in the event of a failure of the power source 17 to operate; and reference numeral 56 represents a controller operable to permit a supply of the electric current from the power source 17 to the focusing coil 3 and the electromagnet assembly 50 in response to receipt of an input signal indicative of a termination of the information reading or recording from or on the optical disc 15 and also to permit a supply of the electric current from the backup power source 18 to the focusing coil 3 and the electromagnet assembly 50, the supply of the electric current to the electromagnet assembly 50 being initiated after passage of a predetermined time sufficient to allow the lens holder 2 and, hence, the movable unit to move in the direction A away from the optical disc 15 as a result of the supply of the electric current to the focusing coil 3 whereas the supply of the electric current to the focusing coil 3 and the electromagnet assembly 50 is interrupted after the shutter 40 completes its selective opening and closing operation.

The lens drive mechanism of the above described construction according to the fourth preferred embodiment of the present invention operates in the following manner.

In the first place, the drive of the objective lens assembly 1 in the focusing direction F will be described with particular reference to Fig. 30. When an electric power is supplied across the focusing coil 3 fixed to the lens holder carrying the objective lens assembly 1, by the electromagnetism created by the electric current flowing across the focusing coil 3 and the magnetic flux produced by the focusing magnet 7 fixed to the actuator base 30, the focusing coil 3 receives an electromagnetic force acting in a direction parallel to the direction K of the optical axis of the objective lens assembly so that the lens holder 2 supported by the shaft 6 fixed at one end to the actuator base 30 is slidingly moved in a direction parallel to the direction of the optical axis K, thereby driving the objective lens assembly 1 in the direction of the optical axis K thereof.

The drive of the objective lens assembly 1 in the tracking direction T is accomplished when the electric power is supplied across the tracking coil 4 fixed to the lens holder 2 carrying the objective lens assembly 1. More specifically, when the electric power flows across the tracking coil 4, by the magnetism created by the electric current flowing across the tracking coil 4 and the magnetic flux produced by the tracking magnet 8 mounted on the actuator base 30, the tracking coil 4 receives an electromagnetic force acting around the shaft 6 and is therefore driven around the shaft 6 fixed at one end to the actuator base 30.

The operation of the shutter 40 which takes place in the event of the failure to supply the electric power will now be described with reference to Figs. 30 to 40 as applicable to the case where, while the focusing direction F lies parallel to the direction in which the gravitational force acts, the lend drive mechanism is disposed above and below the opposite surfaces of the optical disc 15.

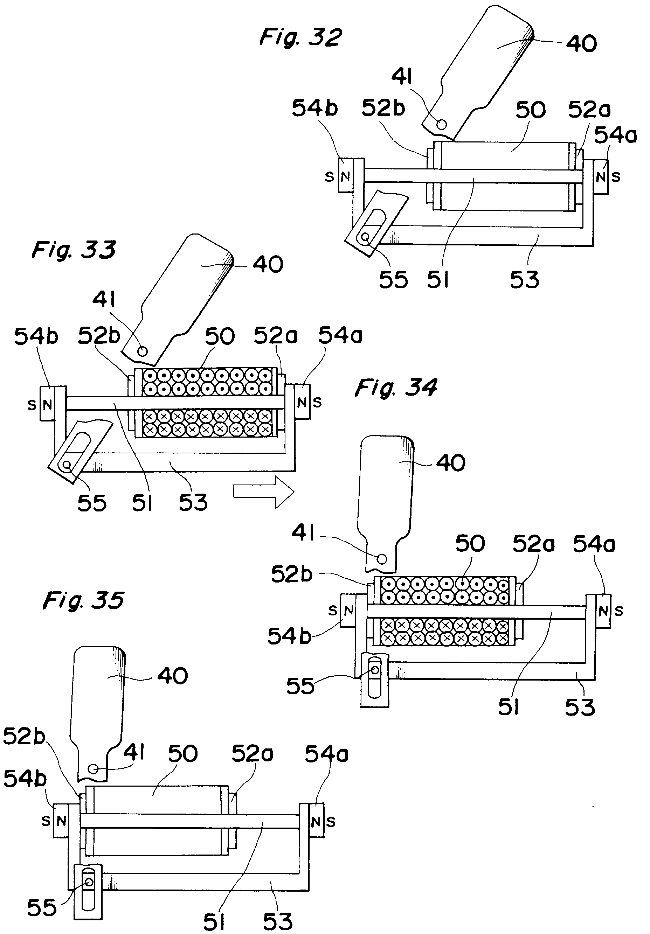

Assuming that the control in the focusing direction F is taking place, no electric current is supplied to the electromagnet assembly 50 and, hence, the electromagnet assembly 50 assumes a position shown in Fig. 32. In this condition, the electromagnet assembly 50 is held in position by the magnetic force developed between the permanent magnet 54b and the magnetizable plate 52b with the shutter 40 consequently held at the open position shown by the solid line in Fig. 30.

However, at the time of termination of the information recording or reading, the controller 56 shown in Fig. 36 receives a signal indicative of the termination of the information recording or reading and, in response thereto, causes the power source 17 to supply a direct current flowing required to drive the lens holder 2 and, hence, the movable unit in the direction A away from the optical disc 15 and, hence, the objective lens assembly 1 is separated away from the optical disc 15. Thus, after the predetermined time required to establish this condition, the supply of the direct current flowing in such a direction as shown in Fig. 33 from the power source 17 to the electromagnet assembly 50 is initiated by the controller 56. By the action of the magnetic repulsive force developed between the electromagnet assembly 50 and the permanent magnet 54b and the magnetic attractive force developed between the electromagnet assembly 50 and the permanent magnet 54a, the iron core 51, the magnet holder 53 and the permanent magnets 54a and 54b receive a force acting in a direction shown by the arrow in Fig. 33 and are therefore moved in a direction shown by the arrow in Fig. 33. As the magnet holder 53 is so moved, the drive pin 55 acts on the shutter 40 to rotate the latter. When the magnet holder 53 is brought to such a position as shown in Fig. 34, the shutter 40 is held in the closed position closing the opening 20a in the covering 20 as shown by the phantom line in Fig. 30. At this time, the electromagnet assembly 50 is retained in that position by the action of the magnetic force developed between the permanent magnet 54a and the magnetizable plate 52a while the shutter 40 is rotated to and retained at the closed position, as shown by the phantom line in Fig. 30, to close the opening 20a in the covering 20. After the shutter 40 has been retained in the closed position, the supply of the electric current from the power source 17 to the focusing coil 3 is interrupted, followed by an interruption of the supply of the electric power to the electromagnet assembly 50. Although the lens holder 2 tends to fall downwards by gravity towards the optical disc 15 when the electric power supply to the focusing coil 3 is interrupted, the closure of the opening 20a in the covering 20 by the shutter 40 then held at the closed position results in a retention of the objective lens assembly 1 at a position spaced a distance away from the optical disc 15.

On the other hand, should the power source 17 abruptly fail to supply the electric power during the information recording or reading by some reason, the voltage of the power source 17 being monitored by the controller 56 drops and the signal indicative of the voltage drop is then inputted. As a result thereof, the focusing coil 3 is supplied with the direct current, flowing in a direction required to move the lens holder 2 and, hence, the movable unit away from the optical disc 15, from the backup power source 18 and, therefore, the objective lens assembly 1 is separated from the optical disc 15. After the predetermined time required to establish this condition, the supply of the electric current from the backup power source 18 to the electromagnet assembly 50 is initiated by the controller 56 and the electromagnet assembly 50 is powered. Then, by the action of the magnetic repulsive force developed between the electromagnet assembly 50 and the permanent magnet 54b and the magnetic attractive force developed between the electromagnet assembly 50 and the permanent magnet 54a, the iron core 51, the magnet holder 53 and the permanent magnets 54a and 54b receive a force acting in a direction shown by the arrow in Fig. 33 and are therefore moved in a direction shown by the arrow in Fig.33. As the magnet holder 53 is so moved, the drive pin 55 acts on the shutter 40 to rotate the latter. When the magnet holder 53 is brought to such a position as shown in Fig. 34, the shutter 40 is held in the closed position closing the opening 20a in the covering 20 as shown by the phantom line in Fig. 30. At this time, the electromagnet assembly 50 is retained in that position by the action of the magnetic force developed between the permanent magnet 54a and the magnetizable plate 52a while the shutter 40 is rotated to and retained at the closed position, as shown by the phantom line in Fig. 30, to close the opening 20a in the covering 20. After the shutter 40 has been retained in the closed position, the supply of the electric current from the power source 17 to the focusing coil 3 is interrupted, followed by an interruption of the supply of the electric power to the electromagnet assembly 50. Although the lens holder 2 tends to fall downwards by gravity towards the optical disc 15 when the electric power supply to the focusing coil 3 is interrupted, the closure of the opening 20a in the covering 20 by the shutter 40 then held at the closed position results in a retention of the objective lens assembly 1 at a position spaced a distance away from the optical disc 15.

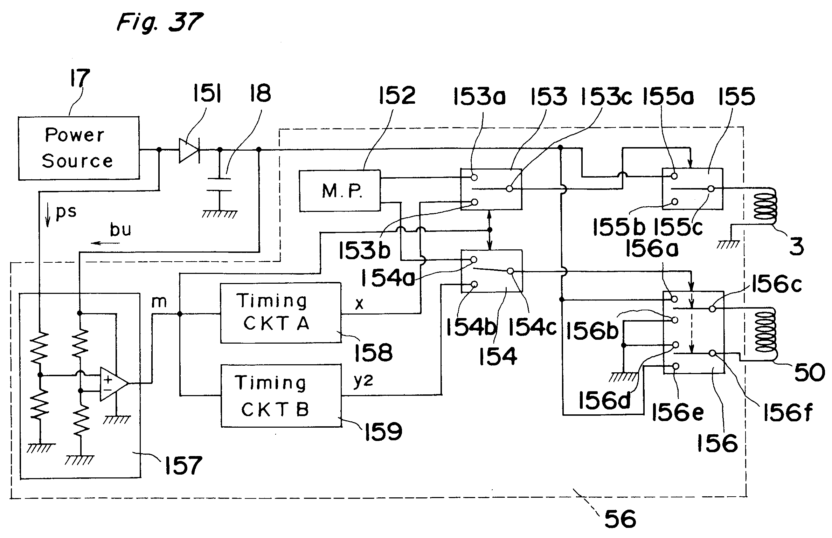

Reference is now made to Figs. 37 to 39. Particularly in Fig. 37, reference numeral 151 represents a diode; reference character ps represents an output signal from the power source 17; and reference character bu represents an output signal from the backup power source 18. The controller 56 shown therein includes a microprocessor (M.P.) 152 operable to cause the power source 17 to supply the electric power, required to separate the lens holder 2 away from the optical disc 15 in the direction A, to the focusing coil 3 when the signal indicative of the termination of the information recording or reading on or from the optical disc 15 is inputted and also to output an electric signal necessary to supply the electric power, required to operate the shutter 40, from the power source 17 to the electromagnet assembly 50 after a predetermined time required for the lens holder 2 to move in the direction A away from the optical disc 15.

The controller 56 also includes a first switch 153 having terminals 153a, 153b and 153c; a second switch 154 having terminals 154a, 154b and 154c; a third switch 155 having terminals 155a, 155b and 155c; a fourth switch 156 having terminals 156a, 156b, 156c, 156d, 156e and 156f; and a voltage monitor 157 comprising at least four resistors and a comparator for monitoring the voltage of the power source 17 and operable to receive the output signals ps and bu respectively from the power source 17 and the backup power source 18 so that, when the voltage of the power source 17 is higher and lower than a predetermined level, high and low level signals m can be outputted therefrom, respectively. This controller 56 further includes a timing circuit A 158 operable in response to an output signal from the voltage monitor 157 to output an electric signal x and a second timing circuit B 159 operable in response to a signal fed from the voltage monitor 157 to output an electric signal y therefrom. The microprocessor 152 has an output connected with the terminals 153a and 154a, the first timing circuit A 158 has an output connected with the terminal 153b, and the timing circuit B 159 has an output connected with the terminal 154b. The terminals 155a, 156a and 156e are connected with the power source 17 or the backup power source 18, a switching between the power source 17 and the backup power source 18 being accomplished by the diode 151. The switches 153 and 154 performs a switching operation in response to a command represented by the signal fed from the voltage monitor 157, the switch 155 performs a switching operation in response to a command represented by a signal fed from the switch 153, and the switch 156 performs a switching operation in response to a command represented by a signal fed from the switch 154.

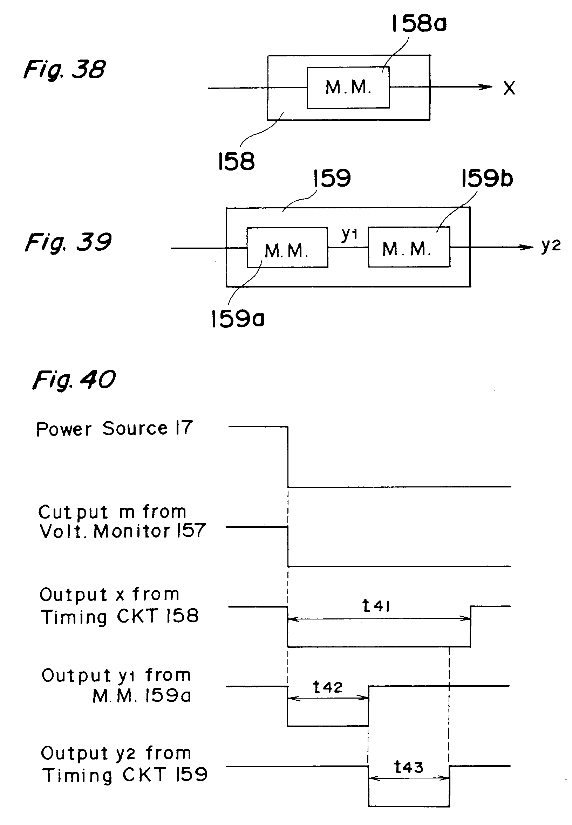

Referring to Fig. 39, reference numeral 158a represents a monostable multivibrator (M.M.), and the timing circuit A 158 shown in Fig. 37 is constituted by at least one monostable multivibrator 158a. In Fig. 40, reference numerals 159a and 159b represent respective monostable multivibrators which form the timing circuit B 159. Reference character y1 represents an output from the monostable multivibrator 159a which is inputted to the monostable multivibrator 159b.

The circuit shown in Fig. 37 necessitated to operate the shutter 40 for the lens drive mechanism operates in the following manner. In the first place, the operation of the timing circuit A 158 shown in Fig. 38 and the timing circuit B 159 shown in Fig. 39 will be discussed with reference to Fig. 40.

The output m generated from the voltage monitor 157 when the voltage of the power source 17 drops is of a waveform as shown in Fig. 40. At this time, the output x generated from the timing circuit A 158 in response to receipt of the output m from the voltage monitor 157 is of a waveform as shown in Fig. 40. In other words, the output x assumes a low level state only during a predetermined length of time t41 after the output m from the voltage monitor 157 has been rendered in a low level state. On the other hand, the output y1 generated from the monostable multivibrator 159 of the timing circuit B 159 in response to receipt of the output m from the voltage monitor 157 is of a waveform as shown in Fig. 40. In other words, the output y1 assumes a low level state only during a predetermined length of time t42 after the output m has been rendered in the low level state. The output from the monostable multivibrator 159b of the timing circuit B 159, that is, the output y2 from the timing circuit B 159, generated in response to receipt of the output y1 from the monostable multivibrator 159a is of a waveform as shown in Fig. 40. In other words, the output y2 assumes a low level state only during a predetermined length of time t43 after the output y1 has changed from the low level state to a high level state. It is to be noted that the predetermined length of time t42 corresponds to the time required for the lens holder 2 to separate away from the optical disc 15 in the direction A, the predetermined length of time t43 corresponds to the time required for the shutter 40 to perform the opening or closing operation, and the predetermined length of time t41 is of a value greater than the sum of the times t42 and t43.

Referring now to Fig. 37, since the voltage of the power source 17 is generally higher than the predetermined level during the operation at the time of termination of the information recording or reading, the output m remains in the high level state. Accordingly, in response to a command represented by the output m from the voltage monitor 157, a switch 153 is held in position with its terminals 153a and 153c connected together and the switch 154 is held in position with its terminals 154a and 154c connected together. When the signal indicative of the termination of the information recording or reading is inputted to the microprocessor 152 in the controller 56, the output from the microprocessor 152 is supplied to the switch 155 through the switch 153 as a command and, therefore, the terminals 155a and 155c are connected only during the time t41. After the time t42 subsequent to the microprocessor 152 having received the signal indicative of the termination of the information recording or reading, the output from the microprocessor 152 is supplied as a command to the switch 156 and, therefore, only during the time t43, the terminals 156a and 156d are connected with the terminals 156c and 156f. In view of this, when the signal indicative of the termination of the information recording or reading is inputted to the microprocessor 152, the direct current required to move the lens holder 2 away from the optical disc 15 is supplied from the power source 17 to the focusing coil 3 through the switch 155. Also, after the time t41 required for the lens holder 2 to be sufficiently separated from the optical disc 15, the direct current required to drive the shutter 40 to the closed position to close the opening 20a in the actuator covering 20 is supplied from the power source 17 to the electromagnet assembly 50 through the switch 156 and, after the time t43 required for the shutter 40 to complete its operation, the connection of the terminals of the switch 156 is released followed by a release of the connection of the terminals of the switch 155.

In the event of the failure of the power source 17 to supply the electric power by some reason during the information recording or reading, the voltage of the power source 17 is lowered down to a level lower than the predetermined level and, therefore, the output m is rendered in a low level state, causing the switch 153 and the switch 154 to connect the terminals 153b and 153c together and the terminals 154b and 154c together in response to the command represented by the output m. At the same time, the output x is supplied as a command to the switch 155 through the switch 153 and, consequently, the terminals 155a and 155d are connected together only during the time t41. Also, the output y2 is supplied as a command to the switch 156 through the switch 154 so that, after the passage of the time t42 subsequent to the failure of the power source 17, the terminals 156a and 156d are connected with the terminals 156c and 156f and, after the length of time t43, the connection between the terminals 156a and 156c and that between the terminals 156d and 156f are released. Thus, the failure of the power source 17 to supply the electric power causes the backup power source 18 to effect the supply of the electric power to the focusing coil 3 through the switch 155 to drive the lens holder 2 in the direction A away from the optical disc 15 and, after the predetermined time t41 required for the lens holder 2 to be completely separated from the optical disc 15, the direct current is supplied from the backup power source 18 to the electromagnet assembly 50 through the switch 156 to drive the shutter 40 to the closed position. Then, after the predetermined time t43 required for the shutter 40 to complete its movement towards the closed position, the connection of the terminals of the switch 156 is released, followed by a release of the connection of the terminals of the switch 155.

As hereinabove described, according to the fourth preferred embodiment of the present invention, the provision of the shutter, the electromagnet assembly and the two permanent magnets is effective to drive the movable unit from the optical disc at the time of the failure of the power source and then to drive the shutter to the closed position closing the opening in the actuator covering. Therefore, even though the objective lens assembly is disposed above the optical disc, any possible collision between the objective lens assembly and the optical disc can advantageously be avoided.

Also, the use of the electromagnet assembly and the two permanent magnets as a means for driving the shutter substantially eliminates the necessity of the supply of the electric current to the electromagnet assembly at any time other than when the shutter performs its selective opening and closing operation since the shutter can be retained at the required position by the action of the magnetic attractive force developed between a corresponding one of the permanent magnets and the iron core. Accordingly, this substantially minimizes the electric power consumption.

At any time other than during the focus control taking place, the shutter is held in the closed position, thereby to provide a relatively high dust-proof effect.

The use of the iron core and the permanent magnets as elements forming parts of the movable unit in the shutter drive means makes it possible to reduce the weight of the movable unit as a whole. Accordingly, in the event that an acceleration acts under the influence of external disturbances while the shutter is retained at the particular position, the force which would act on the movable unit is advantageously reduced. Thus, the influence brought about by the external disturbances can be minimized with the reliability increased consequently.

In describing the fourth embodiment of the present invention, the iron core has been described as having a generally oval cross-section. However, the present invention may not be limited thereto provided that the electromagnet assembly is supported on the iron core for axial movement without being rotated. Therefore, instead of the employment of the oval-sectioned iron core, a round-sectioned iron core may be employed in combination with any suitable means for avoiding a rotation of the electromagnet assembly around the iron core.

In describing the fourth preferred embodiment of the present invention, the lens drive mechanism has been described as having a capability of driving the objective lens assembly in two directions, i.e., the focusing and tracking directions F and T. However, the present invention can equally apply to a lens drive mechanism designed to drive the objective lens assembly only in one direction, i.e., in the focusing direction F.

It is also to be noted that, while the support mechanism for the lens holder has been shown as an axially slidable and rotatable support type, the support mechanism employable in the present invention may be of a type utilizing an elastic member having a function of elastically returning to the neutral point or a hinge because, if the force of returning to the neutral point is chosen to be relatively great, the region in which a linearity of displacement of the movable unit relative to the input current tends to be reduced and it is difficult to impart to the support mechanism the returning force necessary to separate the objective lens assembly away from the optical disc.

In the foregoing fourth embodiment of the present invention, the shutter starts its operation after the lens holder, that is, the movable unit, has been moved in the direction A away from the optical disc in the event of the failure of the power source to supply the electric power. However, arrangement may be made such that the shutter may start its operation in the event that the focusing servo deviates and, in such case, the reliability can be increased.

According to the third embodiment of the present invention, although it has been described that, when the shutter is held in one of the open and closed position, the associated magnetizable plate secured to the electromagnet assembly is magnetically attracted by the corresponding permanent magnet through a portion of the shutter drive base, the magnitude of the magnetic attractive force acting between the respective magnetizable plate and the associated permanent magnet can be adjusted to a desired value by varying the size of the shutter drive base interposed therebetween.

The selective opening and closure of the shutter may be initiated subsequent to the completion of the movement of the movable unit away from the optical disc and, for this purpose, the use may be made of a sensor or the like to detect the completion of the movement of the movable unit away from the optical disc or the use may be made of a delay time greater than the time required to complete the movement of the movable unit away from the optical disc.

Moreover, although in the foregoing embodiment it has been described that the shutter starts its operation at the time of any one of the termination of the information recording or reading or in the event of the abrupt failure of the power source to supply the electric power, arrangement may be made such that the shutter can start its operation only at the time of termination of the information recording or reading or in the event of the failure of the power source to supply the electric power.

Preferably, the operation of the shutter to open the opening in the covering be accomplished by driving the shutter so as to rotate after the objective lens assembly has been moved in the direction away from the optical disc.

Where the optical disc has not yet been mounted on the spindle motor before the shutter opens the opening in the covering, the operation of the shutter to open the opening in the covering should be initiated after the optical disc has been mounted on the spindle motor and the rotation of the spindle motor has subsequently been stabilized. On the other hand, where the optical disc is mounted on the spindle motor before the shutter opens the opening in the covering, the operation of the shutter to open the opening in the covering should be initiated subsequent to the stabilization of the rotation of the spindle motor.

At the time of the shutter opening the opening in the covering, the focusing servo should be pulled in by bringing the objective lens assembly, then separated from the optical disc, progressively towards the optical disc after the completion of the supply of the electric power to the motor subsequent to the retention of the shutter at the open position.

The dust-proof effect exhibited by the shutter according to the second embodiment of the present invention can be appreciated not only in the lens drive mechanism disposed for each of the opposite surfaces of the optical disc, but also in the lens drive mechanism disposed in any manner with respect to the optical disc. For example, where, while the focusing direction F lies parallel to the direction in which the gravitational force acts, the lens drive mechanism is disposed beneath the optical disc, the movable unit can move downwards by its own weight in the event of the failure of the power source to supply the electric power during the information recording or reading or at the time of completion of the information recording or reading.

Yet, instead of the use of the microprocessor, a digital signal processor may be employed in the practice of the present invention.

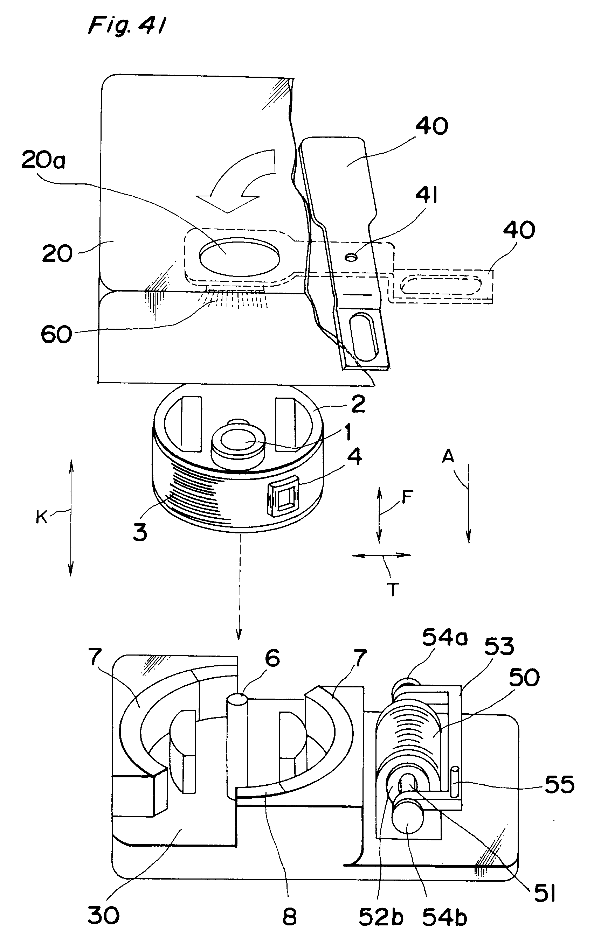

### Fifth Embodiment (Figs. 41 to 47)

Referring to Figs. 30 to 35, reference character F represents a focusing direction; reference character T represents a tracking direction; reference numeral 1 represents an objective lens assembly; reference numeral 2 represents a lens holder enclosing the objective lens assembly 1; reference numeral 3 represents a focusing coil wound on an outer peripheral surface of the lens holder 2 about a winding axis parallel to the direction K of the optical axis; reference numeral 4 represents a tracking coil mounted on the lens holder 2 and wound about an winding axis perpendicular to the direction K of the optical axis; reference numeral 30 represents an actuator base; reference numeral 6 represents a shaft connected rigidly at one end to the actuator base 30 and extending axially movably and rotatably through the lens holder 2; reference numeral 7 represents a focusing magnet secured to the actuator base 30 at a position confronting the focusing coil 3 for generating a magnetic flux in a direction perpendicular to the winding axis of the focusing coil 3; reference numeral 8 represents a tracking magnet secured to the actuator base 30 at a position confronting the tracking coil 4 for generating a magnetic flux in a direction parallel to the winding axis of the tracking coil 4; reference numeral 20 represents a covering mounted on the actuator base 30 so as to enclose the lens drive mechanism as a whole and having an opening 20a defined therein at a location confronting the objective lens assembly 1; reference numeral 40 represents a shutter rotatable about an axis parallel to the direction K of the optical axis and having a groove defined therein; reference numeral 41 represents a pivot pin secured to the covering 20 and about which the shutter 40 rotates; reference numeral 50 represents an electromagnet assembly secured to the actuator base 30; reference numeral 51 represents an iron core of generally oval cross-section extending through the electromagnet assembly 50 in a direction along the axis around which the electromagnet assembly 50 is wound and supported for axial movement by the electromagnet assembly 50; reference numerals 52a and 52b represents generally ring-shaped, magnetizable plates rigidly mounted on the respective opposite ends of the electromagnet assembly 50; reference numeral 53 represents a magnet holder securing the opposite ends of the iron core 51; reference numerals 54a and 54b represent respective permanent magnets fixedly mounted on magnet holder so as to confront opposite pole faces of the iron core 51; reference numeral 55 represents a drive pin having one end rigidly secured to the magnet holder 53 and the other end engaged in the groove defined in the shutter 40 and operable to transmit a driving force to the shutter 40 to rotate the latter; reference numeral 60 represents a cleaning brush mounted on a portion of the shutter which confronts the objective lens assembly 1. It is to be noted that the respective pole faces of the permanent magnets 54a and 54b which confronts the opposite ends of the iron core 51 are of the same polarity.

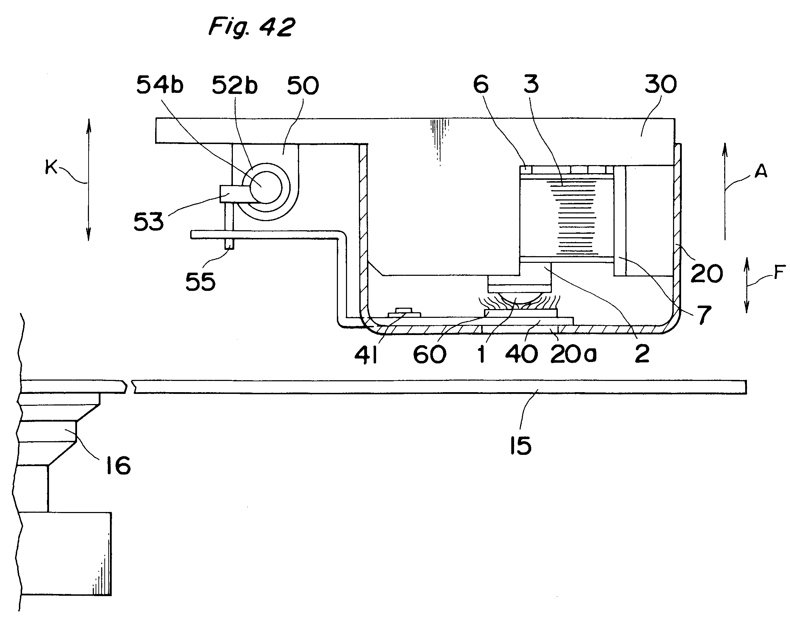

In Fig. 42, reference numeral 15 represents an optical disc; reference numeral 16 represents a spindle motor; and reference character A represents a direction parallel to the direction K of the optical axis and in which the lens holder 2 moves away from the optical disc 15.

A movable unit is constituted by the objective lens assembly 1, the lens holder 2 and their associated component parts while a stationary unit is constituted by the actuator base 30 and its associated component parts, and a support means is constituted by the lens holder 2 and the shaft 6 axially slidably and rotatably extending through the lens holder 2. A drive means for driving the objective lens assembly 1 in the focusing direction F is constituted by the focusing coil 3 and the focusing magnet 7, whereas a drive means for driving the objective lens assembly 1 in the tracking direction T is constituted by the tracking coil 4 and the tracking magnet 8.

An actuating means for driving the shutter 40 between open and closed positions about the pivot pin 41 is constituted by the electromagnet assembly 50, the iron core 51, the magnetizable plates 52a and 52b, the magnet holder 53, the permanent magnets 54a and 54b, the drive pin 55, the shutter 40 and the pivot pin 41. This actuating means is so operable and so positioned that, when the iron core 51 slidably extending through the electromagnet assembly 50 is axially moved in one direction close towards any one of the opposite ends of the electromagnet assembly 50 until it contacts a portion of the magnet holder 53, a corresponding one of the magnetizable plates 52a and 52b secured to the respective ends of the electromagnet assembly 44 is magnetically attracted by the respective permanent magnet 54a or 54b through a portion of the magnet holder 53 to bring the shutter 40 to either the open position, shown by the solid line in Fig. 30 and at which the shutter 40 is clear from the opening 20a in the covering, or the closed position shown by the phantom line in Fig. 30 and at which the shutter 40 closes the opening 20a.

A means for separating the lens holder 2, that is, the movable unit, away from the optical disc 15 is concurrently served by the focusing coil 3 and the focusing magnet 7 which form the drive means for driving the objective lens assembly in the focusing direction F.

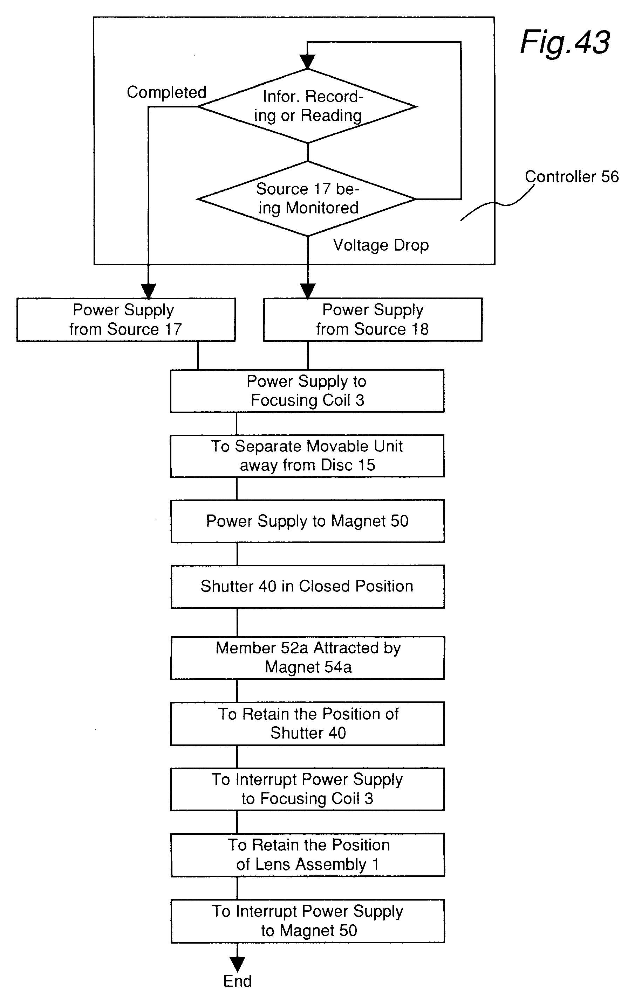

Referring to Fig. 43, reference numeral 17 represents a source of electric power from which an electric current necessary to operate the optical read/write apparatus including the lens drive mechanism; reference numeral 18 represents a backup electric power source constituted by a capacitor or a battery and operable in a manner similar to the power source 18, but in the event of a failure of the power source 17 to operate; and reference numeral 56 represents a controller operable to permit a supply of the electric current from the power source 17 to the focusing coil 3 and the electromagnet assembly 50 in response to receipt of an input signal indicative of a termination of the information reading or recording from or on the optical disc 15 and also to permit a supply of the electric current from the backup power source 18 to the focusing coil 3 and the electromagnet assembly 50, the supply of the electric current to the electromagnet assembly 50 being initiated after passage of a predetermined time sufficient to allow the lens holder 2 and, hence, the movable unit to move in the direction A away from the optical disc 15 as a result of the supply of the electric current to the focusing coil 3 whereas the supply of the electric current to the focusing coil 3 and the electromagnet assembly 50 is interrupted after the shutter 40 completes its selective opening and closing operation.

The lens drive mechanism of the above described construction according to the fifth preferred embodiment of the present invention operates in the following manner.

In the first place, the drive of the objective lens assembly 1 in the focusing direction F will be described with particular reference to Fig. 41. When an electric power is supplied across the focusing coil 3 fixed to the lens holder carrying the objective lens assembly 1, by the electromagnetism created by the electric current flowing across the focusing coil 3 and the magnetic flux produced by the focusing magnet 7 fixed to the actuator base 30, the focusing coil 3 receives an electromagnetic force acting in a direction parallel to the direction K of the optical axis of the objective lens assembly so that the lens holder 2 supported by the shaft 6 fixed at one end to the actuator base 30 is slidingly moved in a direction parallel to the direction of the optical axis K, thereby driving the objective lens assembly 1 in the direction of the optical axis K thereof.

The drive of the objective lens assembly 1 in the tracking direction T is accomplished when the electric power is supplied across the tracking coil 4 fixed to the lens holder 2 carrying the objective lens assembly 1. More specifically, when the electric power flows across the tracking coil 4, by the magnetism created by the electric current flowing across the tracking coil 4 and the magnetic flux produced by the tracking magnet 8 mounted on the actuator base 30, the tracking coil 4 receives an electromagnetic force acting around the shaft 6 and is therefore driven around the shaft 6 fixed at one end to the actuator base 30.

The operation of the shutter 40 which takes place in the event of the failure to supply the electric power will now be described with reference to Figs. 41 to 43 as applicable to the case where, while the focusing direction F lies parallel to the direction in which the gravitational force acts, the lend drive mechanism is disposed above and below the opposite surfaces of the optical disc 15.

Assuming that the control in the focusing direction F is taking place, no electric current is supplied to the electromagnet assembly 50 and, hence, the electromagnet assembly 50 assumes a position shown in Fig. 32. In this condition, the electromagnet assembly 50 is held in position by the magnetic force developed between the permanent magnet 54b and the magnetizable plate 52b with the shutter 40 consequently held at the open position shown by the solid line in Fig. 41.

However, at the time of termination of the information recording or reading, the controller 56 shown in Fig. 43 receives a signal indicative of the termination of the information recording or reading and, in response thereto, causes the power source 17 to supply a direct current flowing required to drive the lens holder 2 and, hence, the movable unit in the direction A away from the optical disc 15 and, hence, the objective lens assembly 1 is separated away from the optical disc 15. Thus, after the predetermined time required to establish this condition, the supply of the direct current from the power source 17 to the electromagnet assembly 50 is initiated by the controller 56. By the action of the magnetic repulsive force developed between the electromagnet assembly 50 and the permanent magnet 54b and the magnetic attractive force developed between the electromagnet assembly 50 and the permanent magnet 54a, the iron core 51, the magnet holder 53 and the permanent magnets 54a and 54b are moved in a direction along the iron core 51. As the magnet holder 53 is so moved, the drive pin 55 acts on the shutter 40 to rotate the latter. At this time, as the shutter 40 is rotated, the cleaning brush 60 carried by the shutter 40 sweeps an outer surface of the objective lens assembly 1 to accomplish a cleaning of the objective lens assembly 1. When the magnet holder 53 is brought into contact with the magnetizable plate 52a, the shutter 40 is held in the closed position closing the opening 20a in the covering 20 as shown by the phantom line in Fig. 41. At this time, the electromagnet assembly 50 is retained in that position by the action of the magnetic force developed between the permanent magnet 54a and the magnetizable plate 52a while the shutter 40 is rotated to and retained at the closed position, as shown by the phantom line in Fig. 41, to close the opening 20a in the covering 20. After the shutter 40 has been retained in the closed position, the supply of the electric current from the power source 17 to the focusing coil 3 is interrupted, followed by an interruption of the supply of the electric power to the electromagnet assembly 50.

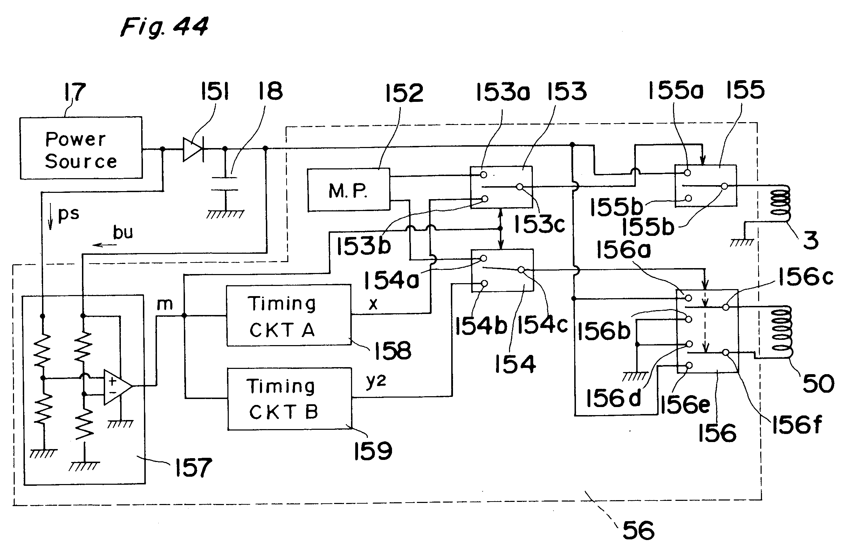

Reference is now made to Figs. 44 to 46. Particularly in Fig. 44, reference numeral 151 represents a diode; reference character ps represents an output signal from the power source 17; and reference character bu represents an output signal from the backup power source 18. The controller 56 shown therein includes a microprocessor (M.P.) 152 operable to cause the power source 17 to supply the electric power, required to separate the lens holder 2 away from the optical disc 15 in the direction A, to the focusing coil 3 when the signal indicative of the termination of the information recording or reading on or from the optical disc 15 is inputted and also to output an electric signal necessary to supply the electric power, required to operate the shutter 40, from the power source 17 to the electromagnet assembly 50 after a predetermined time required for the lens holder 2 to move in the direction A away from the optical disc 15.

The controller 56 also includes a first switch 153 having terminals 153a, 153b and 153c; a second switch 154 having terminals 154a, 154b and 154c; a third switch 155 having terminals 155a, 155b and 155c; a fourth switch 156 having terminals 156a, 156b, 156c, 156d, 156e and 156f; and a voltage monitor 157 comprising at least four resistors and a comparator for monitoring the voltage of the power source 17 and operable to receive the output signals ps and bu respectively from the power source 17 and the backup power source 18 so that, when the voltage of the power source 17 is higher and lower than a predetermined level, high and low level signals m can be outputted therefrom, respectively. This controller 56 further includes a timing circuit A 158 operable in response to an output signal from the voltage monitor 157 to output an electric signal x and a second timing circuit B 159 operable in response to a signal fed from the voltage monitor 157 to output an electric signal y therefrom. The microprocessor 152 has an output connected with the terminals 153a and 154a, the first timing circuit A 158 has an output connected with the terminal 153b, and the timing circuit B 159 has an output connected with the terminal 154b. The terminals 155a, 156a and 156e are connected with the power source 17 or the backup power source 18, a switching between the power source 17 and the backup power source 18 being accomplished by the diode 151. The switches 153 and 154 performs a switching operation in response to a command represented by the signal fed from the voltage monitor 157, the switch 155 performs a switching operation in response to a command represented by a signal fed from the switch 153, and the switch 156 performs a switching operation in response to a command represented by a signal fed from the switch 154.

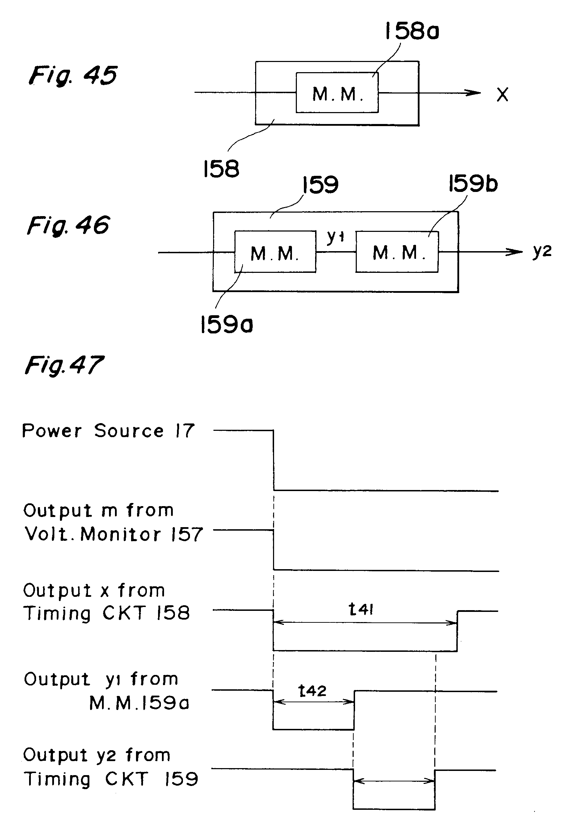

Referring to Fig. 46, reference numeral 158a represents a monostable multivibrator (M.M.), and the timing circuit A 158 shown in Fig. 44 is constituted by at least one monostable multivibrator 158a. In Fig. 47, reference numerals 159a and 159b represent respective monostable multivibrators which form the timing circuit B 159. Reference character y1 represents an output from the monostable multivibrator 159a which is inputted to the monostable multivibrator 159b.

The circuit shown in Fig. 44 necessitated to operate the shutter 40 for the lens drive mechanism operates in the following manner. In the first place, the operation of the timing circuit A 158 shown in Fig. 45 and the timing circuit B 159 shown in Fig. 46 will be discussed with reference to Fig. 47.

The output m generated from the voltage monitor 157 when the voltage of the power source 17 drops is of a waveform as shown in Fig. 47. At this time, the output x generated from the timing circuit A 158 in response to receipt of the output m from the voltage monitor 157 is of a waveform as shown in Fig. 47. In other words, the output x assumes a low level state only during a predetermined length of time t41 after the output m from the voltage monitor 157 has been rendered in a low level state. On the other hand, the output y1 generated from the monostable multivibrator 159 of the timing circuit B 159 in response to receipt of the output m from the voltage monitor 157 is of a waveform as shown in Fig. 47. In other words, the output y1 assumes a low level state only during a predetermined length of time t42 after the output m has been rendered in the low level state. The output from the monostable multivibrator 159b of the timing circuit B 159, that is, the output y2 from the timing circuit B 159, generated in response to receipt of the output y1 from the monostable multivibrator 159a is of a waveform as shown in Fig. 47. In other words, the output y2 assumes a low level state only during a predetermined length of time t43 after the output y1 has changed from the low level state to a high level state. It is to be noted that the predetermined length of time t42 corresponds to the time required for the lens holder 2 to separate away from the optical disc 15 in the direction A, the predetermined length of time t43 corresponds to the time required for the shutter 40 to perform the opening or closing operation, and the predetermined length of time t41 is of a value greater than the sum of the times t42 and t43.

Referring now to Fig. 44, since the voltage of the power source 17 is generally higher than the predetermined level during the operation at the time of termination of the information recording or reading, the output m remains in the high level state. Accordingly, in response to a command represented by the output m from the voltage monitor 157, a switch 153 is held in position with its terminals 153a and 153c connected together and the switch 154 is held in position with its terminals 154a and 154c connected together. When the signal indicative of the termination of the information recording or reading is inputted to the microprocessor 152 in the controller 56, the output from the microprocessor 152 is supplied to the switch 155 through the switch 153 as a command and, therefore, the terminals 155a and 155c are connected only during the time t41. After the time t42 subsequent to the microprocessor 152 having received the signal indicative of the termination of the information recording or reading, the output from the microprocessor 152 is supplied as a command to the switch 156 and, therefore, only during the time t43, the terminals 156a and 156d are connected with the terminals 156c and 156f. In view of this, when the signal indicative of the termination of the information recording or reading is inputted to the microprocessor 152, the direct current required to move the lens holder 2 away from the optical disc 15 is supplied from the power source 17 to the focusing coil 3 through the switch 155. Also, after the time t41 required for the lens holder 2 to be sufficiently separated from the optical disc 15, the direct current required to drive the shutter 40 to the closed position to close the opening 20a in the actuator covering 20 is supplied from the power source 17 to the electromagnet assembly 50 through the switch 156 and, after the time t43 required for the shutter 40 to complete its operation, the connection of the terminals of the switch 156 is released followed by a release of the connection of the terminals of the switch 155.

In the event of the failure of the power source 17 to supply the electric power by some reason during the information recording or reading, the voltage of the power source 17 is lowered down to a level lower than the predetermined level and, therefore, the output m is rendered in a low level state, causing the switch 153 and the switch 154 to connect the terminals 153b and 153c together and the terminals 154b and 154c together in response to the command represented by the output m. At the same time, the output x is supplied as a command to the switch 155 through the switch 153 and, consequently, the terminals 155a and 155d are connected together only during the time t41. Also, the output y2 is supplied as a command to the switch 156 through the switch 154 so that, after the passage of the time t42 subsequent to the failure of the power source 17, the terminals 156a and 156d are connected with the terminals 156c and 156f and, after the length of time t43, the connection between the terminals 156a and 156c and that between the terminals 156d and 156f are released. Thus, the failure of the power source 17 to supply the electric power causes the backup power source 18 to effect the supply of the electric power to the focusing coil 3 through the switch 155 to drive the lens holder 2 in the direction A away from the optical disc 15 and, after the predetermined time t41 required for the lens holder 2 to be completely separated from the optical disc 15, the direct current is supplied from the backup power source 18 to the electromagnet assembly 50 through the switch 156 to drive the shutter 40 to the closed position. Then, after the predetermined time t43 required for the shutter 40 to complete its movement towards the closed position, the connection of the terminals of the switch 156 is released, followed by a release of the connection of the terminals of the switch 155.

As hereinabove described, according to the fifth preferred embodiment of the present invention, the provision of the shutter with the cleaning brush is effective to accomplish the cleaning of the objective lens assembly 1 as the shutter is rotated towards the closed position during the movement of the lens holder in the direction away from the optical disc. Accordingly, at any time other than the period in which the information recording or reading is effected, the opening in the covering is closed by the shutter thereby to provide a high dust-proof effect with the objective lens assembly cleaned.

In describing the fifth embodiment of the present invention, the iron core has been described as having a generally oval cross-section. However, the present invention may not be limited thereto provided that the electromagnet assembly is supported on the iron core for axial movement without being rotated. Therefore, instead of the employment of the oval-sectioned iron core, a round-sectioned iron core may be employed in combination with any suitable means for avoiding a rotation of the electromagnet assembly around the iron core.

In describing the fifth preferred embodiment of the present invention, the lens drive mechanism has been described as having a capability of driving the objective lens assembly in two directions, i.e., the focusing and tracking directions F and T. However, the present invention can equally apply to a lens drive mechanism designed to drive the objective lens assembly only in one direction, i.e., in the focusing direction F.

It is also to be noted that, while the support mechanism for the lens holder has been shown as an axially slidable and rotatable support type, the support mechanism employable in the present invention may be of a type utilizing an elastic member having a function of elastically returning to the neutral point or a hinge because, if the force of returning to the neutral point is chosen to be relatively great, the region in which a linearity of displacement of the movable unit relative to the input current tends to be reduced and it is difficult to impart to the support mechanism the returning force necessary to separate the objective lens assembly away from the optical disc.

The selective opening and closure of the shutter may be initiated subsequent to the completion of the movement of the movable unit away from the optical disc and, for this purpose, the use may be made of a sensor or the like to detect the completion of the movement of the movable unit away from the optical disc or the use may be made of a delay time greater than the time required to complete the movement of the movable unit away from the optical disc.

According to the third embodiment of the present invention, although it has been described that, when the shutter is held in one of the open and closed position, the associated magnetizable plate secured to the electromagnet assembly is magnetically attracted by the corresponding permanent magnet through a portion of the shutter drive base, the magnitude of the magnetic attractive force acting between the respective magnetizable plate and the associated permanent magnet can be adjusted to a desired value by varying the size of the shutter drive base interposed therebetween.

Moreover, although in the foregoing embodiment it has been described that the shutter starts its operation at the time of any one of the termination of the information recording or reading or in the event of the abrupt failure of the power source to supply the electric power, arrangement may be made such that the shutter can start its operation only at the time of termination of the information recording or reading or in the event of the failure of the power source to supply the electric power.

Preferably, the operation of the shutter to open the opening in the covering be accomplished by driving the shutter so as to rotate after the objective lens assembly has been moved in the direction away from the optical disc.

Where the optical disc has not yet been mounted on the spindle motor before the shutter opens the opening in the covering, the operation of the shutter to open the opening in the covering should be initiated after the optical disc has been mounted on the spindle motor and the rotation of the spindle motor has subsequently been stabilized. On the other hand, where the optical disc is mounted on the spindle motor before the shutter opens the opening in the covering, the operation of the shutter to open the opening in the covering should be initiated subsequent to the stabilization of the rotation of the spindle motor.

At the time of the shutter opening the opening in the covering, the focusing servo should be pulled in by bringing the objective lens assembly, then separated from the optical disc, progressively towards the optical disc after the completion of the supply of the electric power to the motor subsequent to the retention of the shutter at the open position.

The dust-proof effect and the lens cleaning feature exhibited by the shutter according to the second embodiment of the present invention can be appreciated not only in the lens drive mechanism disposed for each of the opposite surfaces of the optical disc, but also in the lens drive mechanism disposed in any manner with respect to the optical disc. For example, where, while the focusing direction F lies parallel to the direction in which the gravitational force acts, the lens drive mechanism is disposed beneath the optical disc, the movable unit can move downwards by its own weight in the event of the failure of the power source to supply the electric power during the information recording or reading or at the time of completion of the information recording or reading.

Although in the foregoing fifth embodiment of the present invention reference has been made to the use of the cleaning brush, any cleaning material such as, for example, a sponge-like resinous material may be employed in place of the cleaning brush.

Yet, instead of the use of the microprocessor, a digital signal processor may be employed in the practice of the present invention.

Although the present invention has fully been described in connection with the various preferred embodiments thereof with reference to the accompanying drawings, it is to be noted that numerous changes and modifications are apparent to those skilled in the art. Such changes and modifications are to be understood as included within the scope of the present invention as defined by the appended claims unless they depart therefrom.

## Claims

1. A lens drive mechanism in an optical information recording and/or reading apparatus for recording or reading information on or from a plate-like recording medium, which mechanism comprises:
a movable unit including an objective lens assembly and a lens holder carrying the objective lens assembly;
a support means for supporting the movable unit for movement in a direction close towards and away from the recording medium;
a stationary unit for supporting the support means;
a drive means for driving the movable unit in said direction relative to the stationary unit;
a retract lever mounted on the stationary unit for pivotal movement about an axis between a first position, in which said retract lever is disengaged from the movable unit, and a second position in which said retract lever is engaged with the movable unit to shift the movable unit away from the recording medium;
a pivot means for pivoting the retract lever about said axis; and
a control means for supplying an electric current to said pivot means by recognizing a termination of the information recording or reading with respect to the recording medium.

2. The lens drive mechanism as claimed in Claim 1, wherein said pivot means comprises an electromagnet assembly having end faces opposite to each other, a magnetizable member mounted on each of the end faces of the electromagnet assembly, and permanent magnets disposed adjacent the opposite end faces of the electromagnet assembly, and wherein one of said electromagnet assembly and said permanent magnets is fixed on the stationary unit and the other of said electromagnet assembly and said permanent magnets is operatively associated with the retract lever, one of said permanent magnets being magnetically attracted by one of the magnetizable member when the retract lever is pivoted to the first position whereas the other of said permanent magnets is magnetically attracted by the other of the magnetizable member when the retract lever is pivoted to the second position.

3. A lens drive mechanism in an optical information recording and/or reading apparatus for recording or reading information on or from a plate-like recording medium, which mechanism comprises:
a movable unit including an objective lens assembly and a lens holder carrying the objective lens assembly;
a support means for supporting the movable unit for movement in a direction close towards and away from the recording medium;
a stationary unit for supporting the support means;
a drive means for driving the movable unit in said direction relative to the stationary unit;
a retract lever mounted on the stationary unit for pivotal movement about an axis between a first position, in which said retract lever is disengaged from the movable unit, and a second position in which said retract lever is engaged with the movable unit to shift the movable unit away from the recording medium;
a first source of electric power for supplying an electric current necessary to allow the information recording and/or reading apparatus, including the lens drive mechanism, to perform a normal operation;
a second source of electric power other than the first electric power source;
a pivot means for pivoting the retract lever about said axis; and
a control means for monitoring a voltage of the first electric power source and for supplying an electric current to said pivot means when an abnormality is detected in the voltage of the first electric power source.

4. The lens drive mechanism as claimed in Claim 3, wherein said pivot means comprises an electromagnet assembly having end faces opposite to each other, a magnetizable member mounted on each of the end faces of the electromagnet assembly, and permanent magnets disposed adjacent the opposite end faces of the electromagnet assembly, and wherein one of said electromagnet assembly and said permanent magnets is fixed on the stationary unit and the other of said electromagnet assembly and said permanent magnets is operatively associated with the retract lever, one of said permanent magnets being magnetically attracted by one of the magnetizable member when the retract lever is pivoted to the first position whereas the other of said permanent magnets is magnetically attracted by the other of the magnetizable member when the retract lever is pivoted to the second position.

5. A lens drive mechanism in an optical information recording and/or reading apparatus for recording or reading information on or from a plate-like recording medium, which mechanism comprises:
a movable unit including an objective lens assembly and a lens holder carrying the objective lens assembly;
a support means for supporting the movable unit for movement in a direction close towards and away from the recording medium;
a stationary unit for supporting the support means;
a first drive means for driving the movable unit in said direction relative to the stationary unit;
a covering member enclosing at least one of the movable unit, the support means and the first drive means and having an opening defined therein at a location alignable with the objective lens assembly;
a shutter member supported for movement between a first position, in which the shutter member closes the opening in the covering member, and a second position in which the shutter member opens the opening in the covering member;
a separating means for separating the movable unit away from the recording medium;
a second drive means for selectively driving the shutter member between the first and second positions; and
a control means for supplying an electric current to said separating means for a predetermined time and then to said second drive means by recognizing a termination of the information recording or reading with respect to the recording medium.

6. The lens drive mechanism as claimed in Claim 5, further comprising a cleaning member provided on the shutter member for cleaning the objective lens assembly during the movement of the shutter member.

7. The lens drive mechanism as claimed in Claim 5, wherein said second drive means includes a drive motor mounted on one of the stationary unit and the covering member, a reduction gear assembly for reducing a drive of the drive motor, and a cam means for driving the shutter member upon receipt of the drive of the drive motor transmitted through said reduction gear assembly.

8. The lens drive mechanism as claimed in Claim 7, further comprising a cleaning member provided on the shutter member for cleaning the objective lens assembly during the movement of the shutter member.

9. The lens drive mechanism as claimed in Claim 5, wherein said second drive means comprises an electromagnet assembly having end faces opposite to each other, a magnetizable member mounted on each of the end faces of the electromagnet assembly, and permanent magnets disposed adjacent the opposite end faces of the electromagnet assembly, and wherein one of said electromagnet assembly and said permanent magnets is fixed on the stationary unit and the other of said electromagnet assembly and said permanent magnets is operatively associated with the shutter member, one of said permanent magnets being magnetically attracted by one of the magnetizable member when the shutter member is driven to the first position whereas the other of said permanent magnets is magnetically attracted by the other of the magnetizable member when the shutter member is driven to the second position.

10. The lens drive mechanism as claimed in Claim 9, further comprising a cleaning member provided on the shutter member for cleaning the objective lens assembly during the movement of the shutter member.

11. A lens drive mechanism in an optical information recording and/or reading apparatus for recording or reading information on or from a plate-like recording medium, which mechanism comprises:
a movable unit including an objective lens assembly and a lens holder carrying the objective lens assembly;
a support means for supporting the movable unit for movement in a direction close towards and away from the recording medium;
a stationary unit for supporting the support means;
a first drive means for driving the movable unit in said direction relative to the stationary unit;
a covering member enclosing at least one of the movable unit, the support means and the first drive means and having an opening defined therein at a location alignable with the objective lens assembly;
a shutter member supported for movement between a first position, in which the shutter member closes the opening in the covering member, and a second position in which the shutter member opens the opening in the covering member;
a first source of electric power for supplying an electric current necessary to allow the information recording and/or reading apparatus, including the lens drive mechanism, to perform a normal operation;
a second source of electric power other than the first electric power source;
a separating means for separating the movable unit away from the recording medium;
a second drive means for selectively driving the shutter member between the first and second positions; and
a control means for monitoring a voltage of the first electric power source and for supplying an electric current from the second electric power source to said separating means for a predetermined time and then to said second drive means when an abnormality is detected in the voltage of the first electric power source.

12. The lens drive mechanism as claimed in Claim 11, further comprising a cleaning member provided on the shutter member for cleaning the objective lens assembly during the movement of the shutter member.

13. The lens drive mechanism as claimed in Claim 11, wherein said second drive means includes a drive motor mounted on one of the stationary unit and the covering member, a reduction gear assembly for reducing a drive of the drive motor, and a cam means for driving the shutter member upon receipt of the drive of the drive motor transmitted through said reduction gear assembly.

14. The lens drive mechanism as claimed in Claim 13, further comprising a cleaning member provided on the shutter member for cleaning the objective lens assembly during the movement of the shutter member.

15. The lens drive mechanism as claimed in Claim 11, wherein said second drive means comprises an electromagnet assembly having end faces opposite to each other, a magnetizable member mounted on each of the end faces of the electromagnet assembly, and permanent magnets disposed adjacent the opposite end faces of the electromagnet assembly, and wherein one of said electromagnet assembly and said permanent magnets is fixed on the stationary unit and the other of said electromagnet assembly and said permanent magnets is operatively associated with the shutter member, one of said permanent magnets being magnetically attracted-by one of the magnetizable member when the shutter member is driven to the first position whereas the other of said permanent magnets is magnetically attracted by the other of the magnetizable member when the shutter member is driven to the second position.

16. The lens drive mechanism as claimed in Claim 15, further comprising a cleaning member provided on the shutter member for cleaning the objective lens assembly during the movement of the shutter member.
